(19) Europäisches Patentamt
European Patent Office
Office européen des brevets

(11) Veröffentlichungsnummer: **0 218 131 B1**

# (12) EUROPÄISCHE PATENTSCHRIFT

(45) Veröffentlichungstag der Patentschrift: **30.05.90**

(51) Int. Cl.[5]: **C09B 62/51**, D06P 1/384

(21) Anmeldenummer: **86112901.3**

(22) Anmeldetag: **18.09.86**

(54) **Wasserlösliche Azoverbindungen, Verfahren zu deren Herstellung und ihre Verwendung als Farbstoffe.**

(30) Priorität: **30.09.85 DE 3534781**
**17.07.86 DE 3624136**

(43) Veröffentlichungstag der Anmeldung:
**15.04.87 Patentblatt 87/16**

(45) Bekanntmachung des Hinweises auf die Patenterteilung:
**30.05.90 Patentblatt 90/22**

(84) Benannte Vertragsstaaten:
**BE CH DE FR GB IT LI**

(56) Entgegenhaltungen:
**EP-A- 0 032 187**
**EP-A- 0 111 288**
**EP-A- 0 111 830**
**JP-A-40 017 113**
**JP-A-55 039 672**

**CHEMICAL ABSTRACTS, Band 85, Nr. 14, 4. Oktober 1976, Seite 83, Nr. 95796f, Columbus, Ohio, US; & JP-A-75 31 566**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80(DE)**

(72) Erfinder: **Springer, Hartmut, Am Erdbeerstein 27, D-6240 Königstein/Taunus(DE)**
Erfinder: **Kunze, Michael, Dr., Platanenweg 1a, D-6238 Hofheim am Taunus(DE)**
Erfinder: **Segal, Marcos, Dr., Avenue Jorge Bei Maluf 2073/2173, 08600-Suzano-SP(BR)**
Erfinder: **Russ, Werner, Herbert, Dr., Berliner Strasse 10, D-6238 Hofheim am Taunus(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung liegt auf dem Gebiet der faserreaktiven Azofarbstoffe.

Faserreaktive Farbstoffe werden in großem Umfange für das Färben und Bedrucken von textilen Fasermaterialien eingesetzt, und eine große Zahl brauchbarer Reaktivfarbstoffe für verschiedene Anwendungsbereiche stehen zur Verfügung. So sind beispielsweise in der europäischen Patentanmeldungs-Veröffentlichung Nr. 0 094 055, in der britischen Patentanmeldungs-Veröffentlichung Nr. 2 026 527 und in den japanischen Offenlegungsschriften Sho-57-42986, Sho-58-46185 und Sho-58-46186 Azofarbstoffe beschrieben, die einen faserreaktiven Rest aus der Vinylsulfonyl-Reihe und einen weiteren faserreaktiven Rest aus der Monochlor- oder Monofluortriazinyl-Reihe enthalten. Jedoch kann der erreichte technische Stand nicht voll befriedigen. Die bekannten Farbstoffe besitzen gewisse anwendungstechnische Mängel, wie z.B. ungenügende Eignung für bestimmte Färbeverfahren, und teilweise nicht voll befriedigende Echtheiten, wie z.B. nicht ausreichende Naßlicht- und Schweißlichtechtheiten.

Aus dem Referat Nr. 95796f im Band 85 von 1976 der Chemical Abstracts und aus der japanischen Patentbekanntmachung Sho-55-39672 sind Azofarbstoffe bekannt, die aus einer für wasserlösliche Azofarbstoffe üblichen Diazokomponente ohne faserreaktive Gruppe und einer sulfogruppenhaltigen 1-Amino-8-naphthol-Kupplungskomponente aufgebaut sind, wobei die Aminogruppe der Kupplungskomponente mit einem Triazinrest verbunden ist, der neben einem durch eine faserreaktive Gruppe aus der Vinylsulfonreihe substituierten Phenylaminorest noch durch eine Alkoxygruppe als dritten Substituenten substituiert ist. Die japanische Patentbekanntmachung Sho-40-17113 beschreibt Azofarbstoffe ähnlicher Konstitution, jedoch ist der dritte Substituent im Triazinrest nicht eine Alkoxygruppe, sondern eine gegebenenfalls substituierte Aminogruppe, wie beispielsweise gemäß Beispiel 4 die Phenylaminogruppe. Die Baumwollfärbungen dieses bekannten Farbstoffes von Beispiel 4 zeigen im mit einer alkalischen Schweißlösung feuchten Zustand keine befriedigende Naßlichtechtheit.

Desweiteren sind aus den europäischen Patentanmeldungs-Veröffentlichungen Nrs. 0 111 288A und 0 111 830A sowie aus der europäischen Patentschrift Nr. 0 032 187B Azoverbindungen bekannt, die aus einer Diazokomponente mit einer faserreaktiven Gruppe der Vinylsulfonreihe und einer sulfosubstituierten 1-Amino-8-naphthol-Kupplungskomponente aufgebaut sind, wobei auch bei diesen Farbstoffen an der Aminogruppe der Kupplungskomponente ein Triazinrest gebunden ist, der durch beispielsweise eine Sulfophenylaminogruppe und als dritten Substituenten durch ein Chlor substituiert ist. Ein konstitutionell einfach aufgebauter und somit technisch interessanter Vertreter dieser Gruppe der bekannten Farbstoffe ist der Azofarbstoff des Beispieles 1 der europäischen Patentschrift Nr. 0 032 187, dessen Baumwollfärbungen jedoch eine schlechte Schweiß-Naßlichtechtheit besitzen. Es galt, diese unbefriedigende Echtheitseigenschaft zu verbessern.

Der vorliegenden Erfindung lag die Aufgabe zugrunde, neue wasserlösliche Reaktivfarbstoffe mit verbesserten Eigenschaften zu finden, wobei diese neuen Farbstoffe besonders für das Ausziehverfahren geeignet sein und Färbungen mit hohem Echtheitsniveau liefern sollten. Diese Aufgabe wurde mit der vorliegenden Erfindung gelöst.

Gegenstand der Erfindung sind neue, wertvolle, wasserlösliche Azoverbindungen der allgemeinen Formel (1)

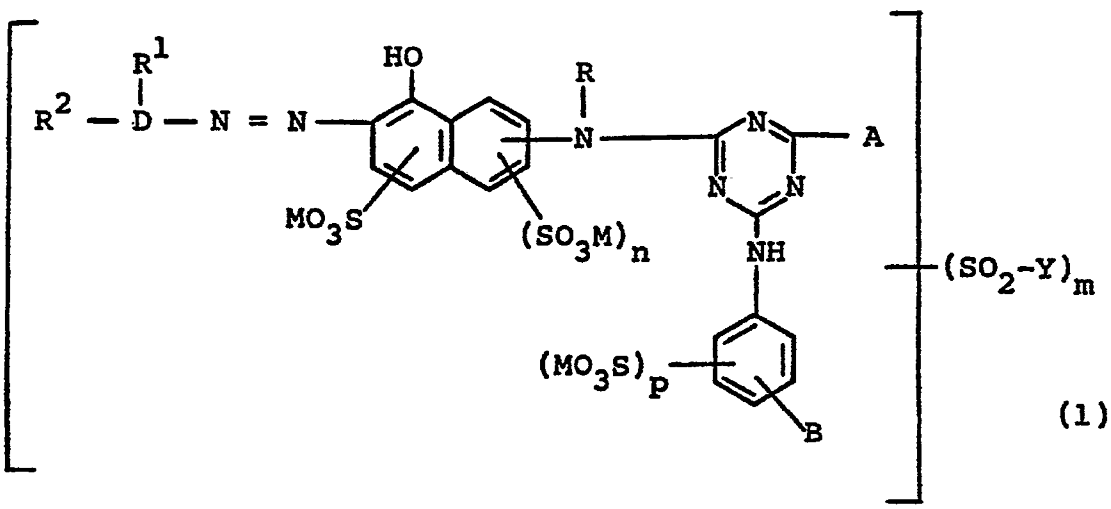

(1)

in welcher bedeuten:

D ist ein Benzolring oder ein Naphthalinring;

$R^1$ ist ein Wasserstoffatom, eine Alkylgruppe von 1 bis 4 C-Atomen, eine Alkoxygruppe von 1 bis 4 C-Atomen, eine Sulfogruppe oder eine Carboxygruppe;

$R^2$ ist ein Wasserstoffatom, eine Alkylgruppe von 1 bis 4 C-Atomen, eine Alkoxygruppe von 1 bis 4 C-Atomen, eine Sulfogruppe, eine Carboxygruppe, ein Arylrest, der substituiert sein kann, eine Hydroxygruppe, eine Nitrogruppe oder ein Halogenatom, wie ein Chlor- oder Bromatom;
R ist ein Wasserstoffatom oder eine Alkylgruppe von 1 bis 4 C-Atomen, die substituiert sein kann;
A ist eine Hydroxygruppe oder ein Rest der Formel (2a), (2b) oder (2c)

$-O-R^3$ , $-S-R^3$ , 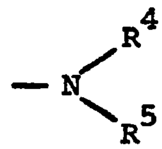

(2a) (2b) (2c)

in welchen
$R^3$ eine Alkylgruppe von 1 bis 4 C-Atomen ist, die substituiert sein kann, oder ein gegebenenfalls substituierter Arylrest ist,
$R^4$ ein Wasserstoffatom, ein gegebenenfalls substituierter aliphatischer Rest oder ein gegebenenfalls substituierter cycloaliphatischer Rest ist und
$R^5$ ein Wasserstoffatom, ein gegebenenfalls substituierter aliphatischer Rest, ein gegebenenfalls substituierter Arylrest, die Cyangruppe, eine gegebenenfalls substituierte Aminogruppe oder eine Gruppe der allgemeinen Formel (2d)

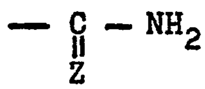 (2d)

bedeutet, in welcher
Z für ein Sauerstoffatom, ein Schwefelatom oder die Imidogruppe NH steht,
oder
$R^4$ und $R^5$ zusammen mit dem Stickstoffatom und einer Alkylengruppe von 4 bis 7 C-Atomen oder mit zwei oder drei Alkylengruppen von 1 bis 5 C-Atomen und einem oder zwei weiteren Heterogruppen, wie NH oder Stickstoff-, Sauerstoff- oder Schwefelatomen, einen 5- bis 8-gliedrigen gesättigten heterocyclischen Ring, wie insbesondere den Morpholin-, Piperidin- oder Piperazin-Ring, bilden;
B befindet sich im Benzolkern in ortho-, meta- oder para-Stellung zur Aminogruppe und ist ein Rest der allgemeinen Formel (2e), (2f) oder (2g)

$-O-R^6$ , $-S-R^6$ , 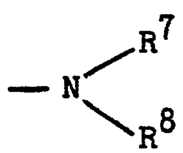

(2e) (2f) (2g)

in welchen
$R^6$ ein Wasserstoffatom oder eine Alkylgruppe von 1 bis 4 C-Atomen, die substituiert sein kann, oder ein gegebenenfalls substituierter Arylrest ist,
$R^7$ ein Wasserstoffatom, ein gegebenenfalls substituierter aliphatischer Rest oder ein gegebenenfalls substituierter cycloaliphatischer Rest ist und
$R^8$ ein Wasserstoffatom, ein gegebenenfalls substituierter aliphatischer Rest, ein gegebenenfalls substituierter Arylrest, die Cyangruppe, eine Gruppe der obengenannten und definierten allgemeinen Formel (2d), die Aminogruppe, eine durch Alkyl von 1 bis 4 C-Atomen und/oder gegebenenfalls substituiertes Aryl mono- oder disubstituierte Aminogruppe oder eine Gruppe der allgemeinen Formel (2h)

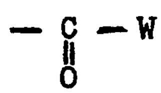 (2h)

bedeutet, in welcher W eine Alkylgruppe von 1 bis 4 C-Atomen ist, die substituiert sein kann, oder eine Alkoxygruppe von 1 bis 4 C-Atomen ist, die substituiert sein kann, oder ein Arylrest ist, der substituiert sein kann, oder
$R^7$ und $R^8$ zusammen mit dem Stickstoffatom und einer Alkylengruppe von 4 bis 7 C-Atomen oder mit zwei oder drei Alkylengruppen von 1 bis 5 C-Atomen und einem oder zwei weiteren Heterogruppen, wie

NH oder Stickstoff-, Sauerstoff- oder Schwefelatomen, einen 5- bis 8-gliedrigen gesättigten heterocyclischen Ring, wie insbesondere den Morpholin-, Piperidin- oder Piperazin-Ring, bilden;
M ist ein Wasserstoffatom oder ein Alkalimetall, wie Natrium, Kalium oder Lithium, oder das Äquivalent eines Erdalkalimetalls, wie das Calciums, bevorzugt jedoch ein Wasserstoffatom oder ein Alkalimetall;
m steht für die Zahl 1 oder 2;
n steht für die Zahl Null oder 1 (wobei im Falle n = Null diese Gruppe ein Wasserstoffatom bedeutet);
p steht für die Zahl Null, 1 oder 2 (wobei im Falle von p = Null diese Gruppe ein Wasserstoffatom bedeutet);
Y ist eine β-Thiosulfatoethyl-, β-Phosphatoethyl-, β-Chlorethyl- oder bevorzugt die Vinylgruppe oder insbesondere bevorzugt eine β-Sulfatoethyl-Gruppe;
die einmal oder zweimal in der Verbindung der Formel (1) befindliche Gruppe $-SO_2-Y$ ist an den Formelrest A oder D oder an beide in beliebigen Positionen gebunden, wobei diese Gruppe an aliphatische und, bevorzugt, aromatische C-Atome von A und an aromatische C-Atome von D oder an aliphatische und, bevorzugt, aromatische C-Atome von $R^1$ und $R^2$ gebunden sein kann.

Sofern m für die Zahl 2 steht, sind die beiden Gruppen $-SO_2-Y$ bevorzugt nicht gleichzeitig an A oder D, sondern eine an A und die andere an D gebunden.

Die obengenannten und definierten Formelglieder können zueinander gleiche oder voneinander verschiedene Bedeutungen besitzen.

Eine Sulfogruppe ist eine Gruppe der allgemeinen Formel $-SO_3M$, eine Carboxygruppe eine Gruppe der allgemeinen Formel -COOM, eine Thiosulfatogruppe eine Gruppe der allgemeinen Formel $-S-SO_3M$, eine Phosphatogruppe eine Gruppe der allgemeinen Formel $-OPO_3M_2$ und eine Sulfatogruppe eine Gruppe der allgemeinen Formel $-OSO_3M$, jeweils mit M der obengenannten Bedeutung.

Die neuen Azoverbindungen können sowohl in saurer Form als auch in Form ihrer Salze vorliegen. Bevorzugt sind sie in Form der Salze, insbesondere der Alkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Alkylgruppen von 1 bis 4 C-Atomen sind bevorzugt die Methyl- und Ethylgruppe; Alkoxygruppen von 1 bis 4 C-Atomen sind bevorzugt die Methoxy- und Ethoxygruppe.

Aliphatische Reste sind bevorzugt Alkylgruppen von 1 bis 4 C-Atomen oder Alkenylgruppen von 2 bis 4 C-Atomen. Sofern die Alkylgruppen substituiert sind, sind sie vorzugsweise durch einen oder zwei, vorzugsweise einen, Substituenten substituiert, die aus der Gruppe Alkoxy von 1 bis 4 C-Atomen, Sulfo, Carboxy, Hydroxy, Sulfato oder gegebenenfalls substituiertes Aryl ausgewählt sind; sofern der Formelrest A eine substituierte Alkylgruppe enthält, kann auch einer oder beide, bevorzugt einer, dieser Substituenten gemäß obiger Definition die genannte Gruppe $-SO_2-Y$ sein.

Sofern Alkoxygruppen substituiert sind, sind sie bevorzugt durch eine Hydroxygruppe oder eine Alkoxygruppe von 1 bis 4 C-Atomen oder eine Alkoxyalkoxygruppe von jeweils 1 bis 4 C-Atomen in den Alkylresten substituiert.

Gegebenenfalls substituierte cycloaliphatische Reste sind bevorzugt 5- bis 8-gliedrige Cycloalkylreste, wie der Cyclopentyl- oder Cyclohexylrest, die substituiert sein können, beispielsweise durch 1 bis 3 Methylgruppen. Arylreste sind vorzugsweise der Phenylrest oder der 1- oder 2-Naphthylrest. Sofern der Phenylrest substituiert ist, ist er bevorzugt durch 1 oder 2 Substituenten substituiert, die aus der Gruppe Alkyl von 1 bis 4 C-Atomen, Alkoxy von 1 bis 4 C-Atomen, Hydroxy, Nitro, Carboxy, Sulfo und Chlor ausgewählt sind; sofern der Naphthylrest substituiert ist, ist er bevorzugt durch eine, zwei oder drei Sulfogruppen substituiert. Sofern die Formelreste $R^2$, $R^3$, $R^4$ und $R^5$ substituierte Arylreste bedeuten, kann auch einer oder zwei, bevorzugt einer, der Substituenten gemäß obiger Definition die genannte Gruppe $-SO_2-Y$ sein.

Substituierte Phenylreste sind insbesondere solche, die durch 1 oder 2 Substituenten substituiert sind, die aus der Gruppe von 2 Sulfo, 1 Alkyl von 1 bis 4 C-Atomen, 1 Alkoxy von 1 bis 4 C-Atomen und 1 Chlor ausgewählt sind, wie beispielsweise der 2-Sulfo-phenyl-, 3-Sulfophenyl-, 4-Sulfophenyl-, 2-Sulfo-4-methyl-phenyl-, 2-Sulfo-4-methoxyphenyl-, 2-Sulfo-4-chlor-5-methyl-phenyl-, 2,5-Disulfophenyl- und 2,5-Disulfo-4-methyl-phenyl-Rest.

Sofern $R^4$ oder $R^5$ ein substituierter Phenylrest ist, können sie insbesondere auch ein durch eine Gruppe der Formel $-SO_2-Y$ mit Y der obengenannten, insbesondere bevorzugten, Bedeutung substituierter Phenylrest oder ein durch diese Gruppe $-SO_2-Y$ und durch eine Alkylgruppe von 1 bis 4 C-Atomen, eine Alkoxygruppe von 1 bis 4 C-Atomen, eine Sulfogruppe oder ein Chloratom substituierter Phenyl-rest sein.

Sofern $R^4$ oder $R^5$ ein substituierter Naphthylrest ist, können sie insbesondere auch ein durch eine Gruppe der Formel $-SO_2-Y$ mit Y der obengenannten, insbesondere bevorzugten, Bedeutung substituierter Naphthylrest oder ein durch diese Gruppe $-SO_2-Y$ und eine oder zwei Sulfogruppen substituierter Naphthylrest sein.

Substituierte Naphthylreste sind bevorzugt Monosulfo-, Disulfo- und Trisulfonaphthylreste, wie beispielsweise der 1-Sulfo-naphth-2-yl-, 5-Sulfo-naphth-2-yl-, 6-Sulfo-naphth-2-yl-, 1,5-Disulfo-naphth-2-yl-, 3,6-Disulfo-naphth-2-yl-, 4,8-Disulfo-naphth-2-yl-, 6,8-Disulfo-naphth-2-yl-, 3,6,8-Trisulfo-naphth-2-yl- und 4,6,8-Trisulfo-naphth-2-yl-Rest.

Bevorzugt bedeutet $R^1$ ein Wasserstoffatom, eine Methyl-, Ethyl-, Methoxy, Ethoxy- oder Sulfogruppe.
Bevorzugt bedeutet $R^2$ ein Wasserstoffatom, eine Methoxy-, Ethoxy- oder eine Sulfogruppe oder ein Chloratom oder eine Phenoxygruppe.
Bevorzugt bedeutet R eine Methyl- oder Ethylgruppe, insbesondere ein Wasserstoffatom.
Bevorzugt bedeutet A eine Aminogruppe der allgemeinen Formel (2c). Bevorzugt ist hierin $R^4$ ein Wasserstoffatom oder eine Alkylgruppe von 1 bis 4 C-Atomen, $R^5$ ein Wasserstoffatom, eine Alkylgruppe von 1 bis 4 C-Atomen oder eine Benzyl- oder Phenethylgruppe oder eine durch eine Sulfogruppe substituierte Alkylgruppe von 2 bis 4 C-Atomen oder eine gemäß den obigen Angaben substituierte Phenylgruppe. Bevorzugt bedeutet B eine Aminogruppe, eine gemäß den obigen Angaben gegebenenfalls substituierte Acylaminogruppe, eine gemäß den obigen Angaben gegebenenfalls substituierte Phenylaminogruppe, eine Hydroxygruppe oder eine Alkoxygruppe von 1 bis 4 C-Atomen.
Bevorzugt ist $R^6$ die Phenyl- oder p-Methyl-phenyl-Gruppe, und bevorzugt ist $R^7$ ein Wasserstoffatom oder eine Alkylgruppe von 1 bis 4 C-Atomen und $R^8$ ein Wasserstoffatom, eine Alkylgruppe von 1 bis 4 C-Atomen oder eine Acylgruppe gemäß den obigen Angaben, die substituiert sein kann, oder eine Alkylgruppe von 1 bis 4 C-Atomen, die durch eine Alkoxygruppe von 1 bis 4 C-Atomen oder eine Sulfogruppe substituiert ist, oder eine durch 1 oder 2 Substituenten aus der Gruppe Amino, Acylamino (gemäß den obigen Angaben), Sulfo, Alkyl von 1 bis 4 C-Atomen, Alkoxy von 1 bis 4 C-Atomen, Nitro und Hydroxy substituierte Phenylgruppe.

Bevorzugte Azoverbindungen aus den Verbindungen der allgemeinen Formel (1) sind Azoverbindungen entsprechend der allgemeinen Formel (1a) und hiervon insbesondere solche entsprechend der allgemeinen Formel (1b)

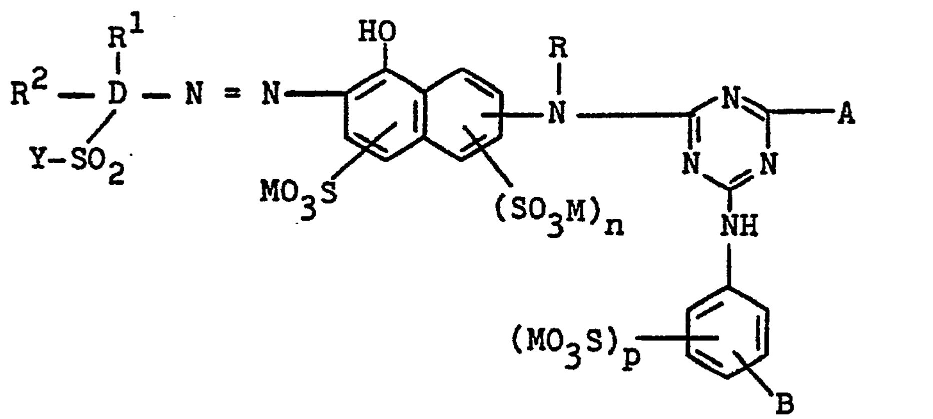

(1a)

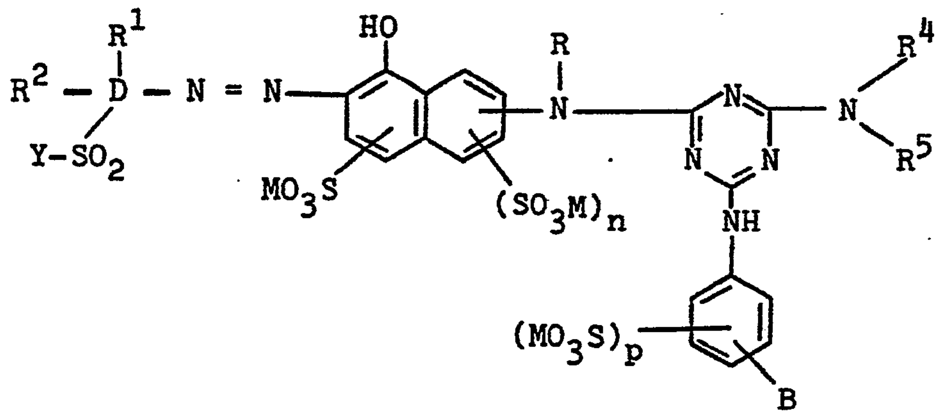

(1b)

in welchen D für einen Benzolring steht und die übrigen Formelglieder die obengenannten, insbesondere bevorzugten Bedeutungen haben oder in welchen D ein 2-Naphthylrest ist, $R^1$ ein Wasserstoffatom oder eine Sulfogruppe bedeutet und $R^2$ eine Sulfogruppe oder bevorzugt ein Wasserstoffatom ist und die übrigen Formelglieder die obengenannten, insbesondere bevorzugten Bedeutungen besitzen.

Weiterhin sind hiervon insbesondere bevorzugt Azoverbindungen entsprechend der allgemeinen Formel (1c)

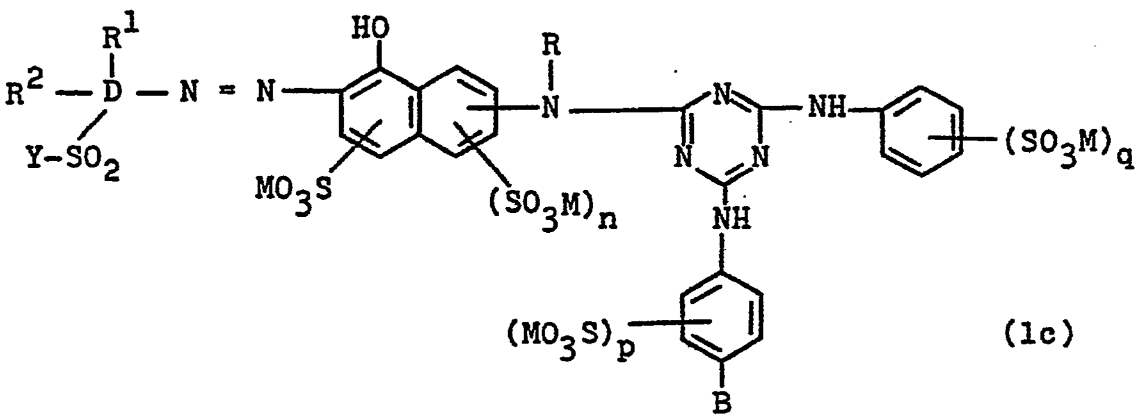

(1c)

in welcher die einzelnen Formelglieder die für Formel (1) genannten, insbesondere bevorzugten Bedeutungen besitzen und q die Zahl 1 oder 2 ist, desweiteren Azoverbindungen entsprechend der allgemeinen Formel (1d)

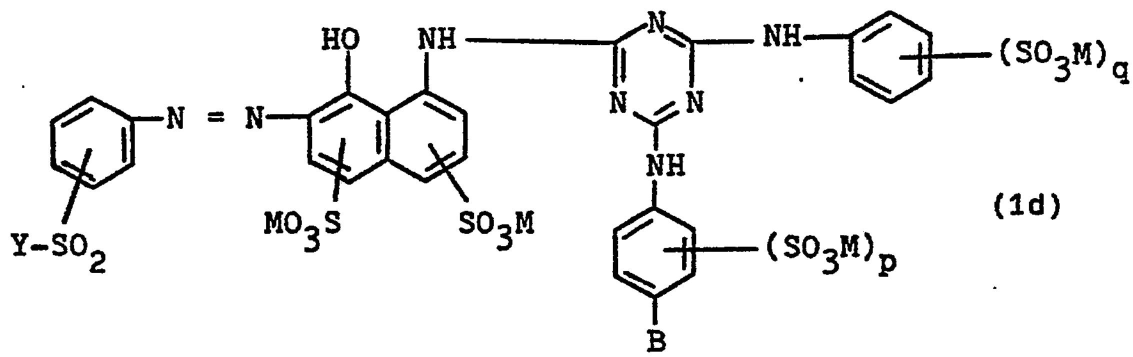

(1d)

in welcher B einen Rest der allgemeinen Formel (2f) oder (2g) mit $R^6$, $R^7$ und $R^8$ der obengenannten, insbesondere bevorzugten Bedeutung ist, q für die Zahl 1 oder 2 steht und die übrigen Formelglieder die oben für Formel (1) genannten insbesondere bevorzugten Bedeutungen haben, desweiteren Azoverbindungen entsprechend der allgemeinen Formel (1e)

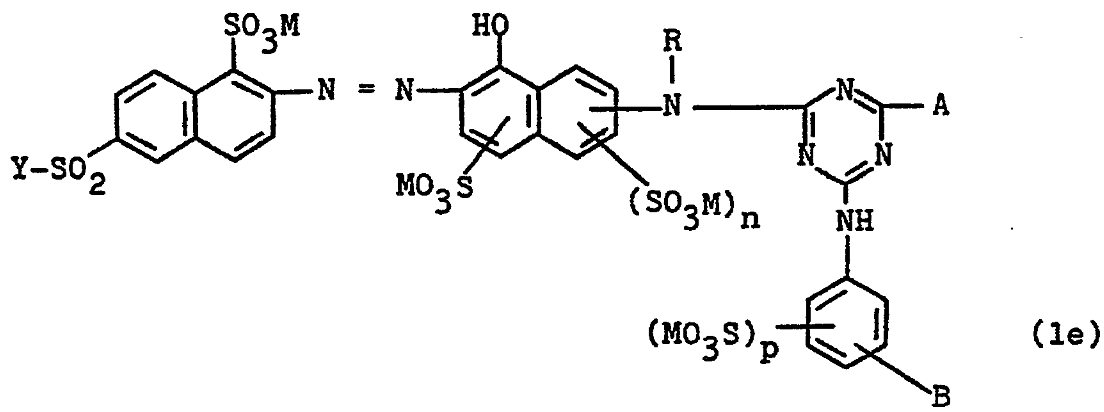

(1e)

in welcher die einzelnen Formelglieder die obengenannten, insbesondere bevorzugten Bedeutungen haben, wobei B insbesondere für einen Rest der obengenannten und definierten allgemeinen Formel (2f) oder (2g) steht.

Bevorzugte erfindungsgemäße Azoverbindungen sind weiterhin solche entsprechend der allgemeinen Formel (1f)

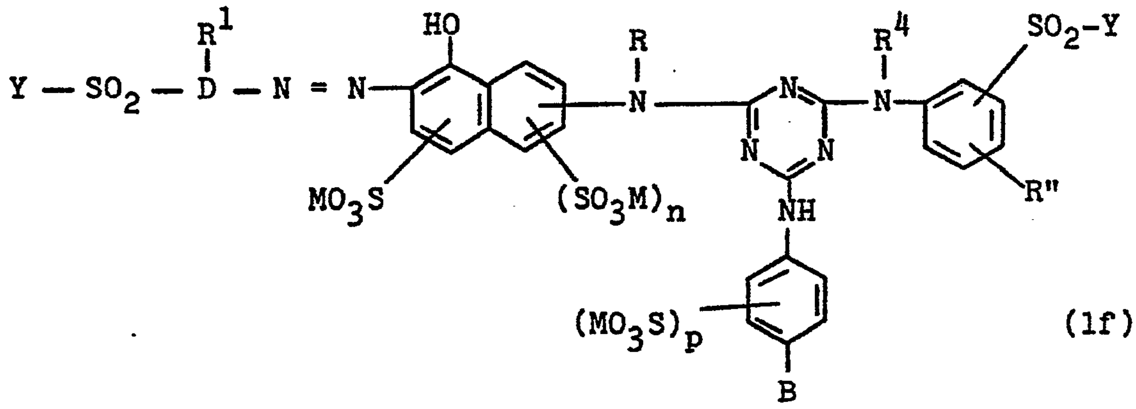

(1f)

in welcher die einzelnen Formelglieder die obengenannten, insbesondere bevorzugten Bedeutungen besitzen, R" ist ein Wasserstoffatom, eine Alkylgruppe von 1 bis 4 C-Atomen, eine Alkoxygruppe von 1 bis 4 C-Atomen, eine Sulfogruppe, eine Carboxygruppe, ein Arylrest, der substituiert sein kann, eine Hydroxygruppe, eine Nitrogruppe oder ein Halogenatom, wie ein Chlor- oder Bromatom, ist und in welcher R und $R^4$ zueinander gleich oder verschieden, bevorzugt gleich, sind und jedes bevorzugt ein Wasserstoffatom oder die Methylgruppe bedeuten sowie B bevorzugt für einen Rest der obengenannten und definierten allgemeinen Formel (2f) oder (2g) steht.

Bevorzugt sind weiterhin Azoverbindungen entsprechend der allgemeinen Formel (1g)

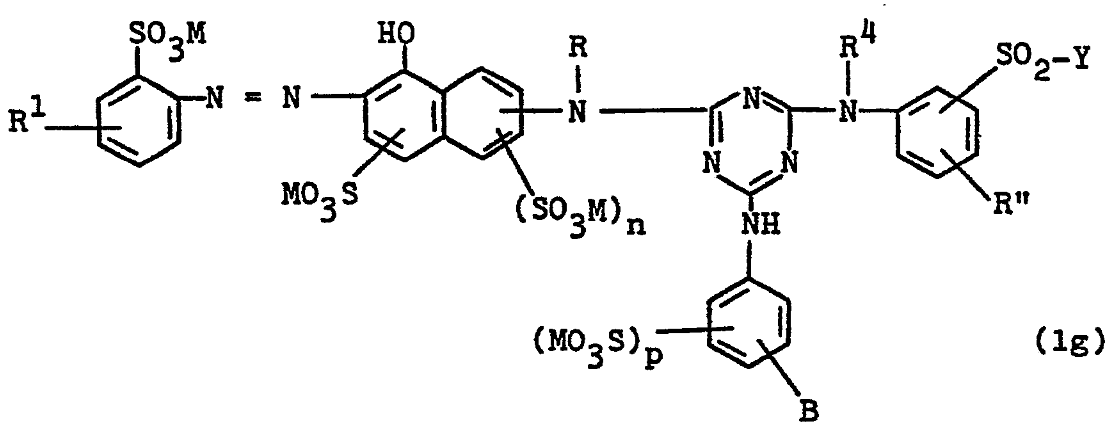

(1g)

in welcher die einzelnen Formelglieder die obengenannten, insbesondere bevorzugten Bedeutungen haben, wobei B insbesondere für einen Rest der obengenannten und definierten allgemeinen Formel (2f) oder (2g) steht,
desweiteren Azoverbindungen entsprechend der allgemeinen Formel (1h)

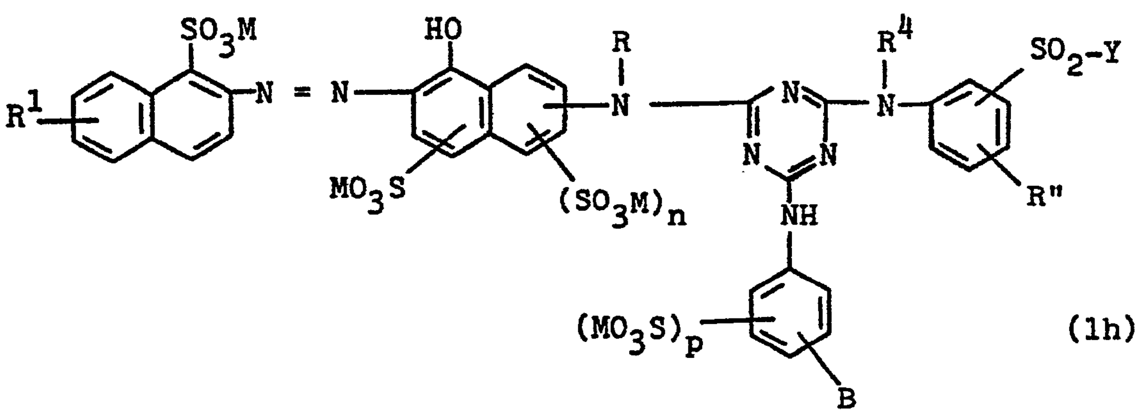

(1h)

in welcher die einzelnen Formelglieder die obengenannten, insbesondere bevorzugten Bedeutungen haben, wobei B insbesondere für einen Rest der obengenannten und definierten allgemeinen Formel (2f) oder (2g) steht.

Bevorzugt bedeuten in den Verbindungen der allgemeinen Formel (1g) $R^1$ eine Sulfogruppe oder eine gegebenenfalls substituierte Aminomethylengruppe und B ein Rest der obigen Formel (2f) oder (2g) mit der obengenannten bevorzugten Bedeutung oder insbesondere bevorzugt ein Rest der obigen Formel (2g), in welcher $R^7$ für ein Wasserstoff steht und $R^8$ eine der obigen bevorzugten Bedeutungen besitzt.

Die vorliegende Erfindung betrifft weiterhin Verfahren zur Herstellung der erfindungsgemäßen Verbindungen der allgemeinen Formel (1). Eines dieser Verfahren kann beispielsweise in der Weise ausgeführt werden, daß man eine Azoverbindung der allgemeinen Formel (3)

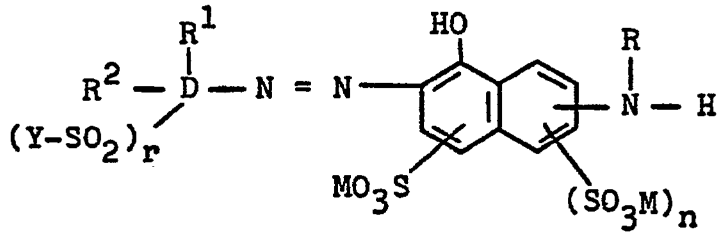
(3),

ein aromatisches Amin der allgemeinen Formel (4) und eine Verbindung der allgemeinen Formel (5)

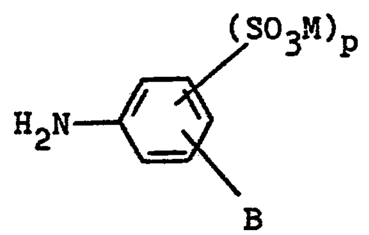

$$H - A - (SO_2\text{-}Y)_s$$

(4) (5)

in welchen D, M, $R^1$, $R^2$, R, n, p, A, B und Y die obengenannten Bedeutungen haben und r und s jedes für die Zahl Null, 1 oder 2 steht (wobei im Falle von r oder s gleich Null diese Gruppe ein Wasserstoffatom bedeutet), mit 2,4,6-Trichlor-s-triazin (Cyanurchlorid) oder 2,4,6-Trifluor-s-triazin (Cyanurfluorid) in beliebiger Reihenfolge oder gegebenenfalls gleichzeitig umsetzt, wobei man die Ausgangsverbindungen der allgemeinen Formel (3) und (5) so auswählt, daß die Summe von (r + s) die Bedeutung von m hat. Da die Umsetzungen mit den obengenannten vier möglichen Ausgangsverbindungen in unterschiedlicher Reihenfolge und gegebenenfalls teilweise auch gleichzeitig ausgeführt werden können, sind Varianten dieses erfindungsgemäßen Verfahrens möglich. Bevorzugt führt man die einzelnen Umsetzungen der Verbindungen (3), (4) und (5) mit dem Cyanurchlorid oder Cyanurfluorid nacheinander aus.

Wichtige erfindungsgemäße Verfahrensvarianten zur Herstellung der erfindungsgemäßen Azoverbindungen der allgemeinen Formel (1) sind beispielsweise dadurch gekennzeichnet, daß man eine Monohalogen-triazinylamino-naphthol-Azoverbindung der allgemeinen Formel (6)

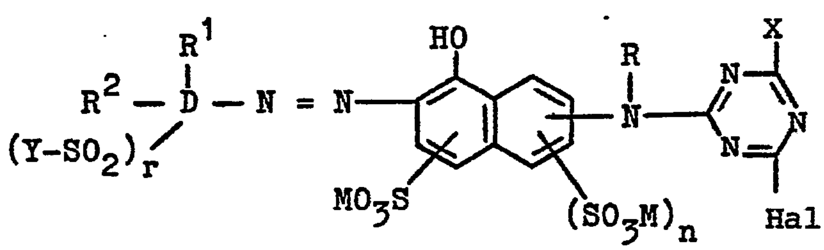
(6)

in welcher D, M, $R^1$, $R^2$, R, Y, n und r die obengenannten Bedeutungen haben, Hal ein Chlor- oder Fluoratom ist und X für eine Gruppe der Formel (4a) oder (5a) steht

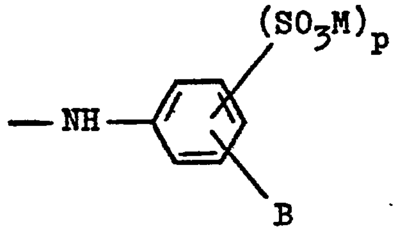

(4a)

$-A-(SO_2-Y)_s$

(5a)

in welchen A, B, M, p und s die obengenannte Bedeutung haben, mit einer aromatischen Aminoverbindung der obengenannten und definierten allgemeinen Formel (4) bzw. einer Verbindung der obengenannten und definierten allgemeinen Formel (5) umsetzt, wobei man die Ausgangsverbindungen der Formeln (3) und (5) so wählt, daß (r + s) die Bedeutung von m besitzt, oder
daß man eine Monohalogen-triazin-Verbindung der allgemeinen Formel (7)

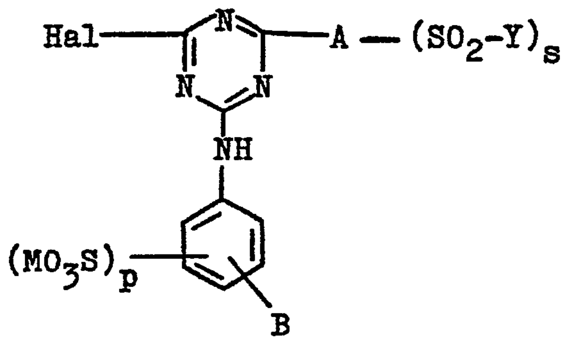

(7)

in welcher Hal, A, B, M, Y, p und s die obengenannten Bedeutungen haben, mit einer Azoverbindung der obengenannten und definierten allgemeinen Formel (3) umsetzt, wobei man diese Ausgangsverbindungen so auswählt, daß die Summe (r + s) die Bedeutung von m besitzt.

Ein anderes erfindungsgemäßes Verfahren kann beispielsweise so ausgeführt werden, daß man eine Triazinylamino-naphtholsulfonsäure-Verbindung der allgemeinen Formel (8)

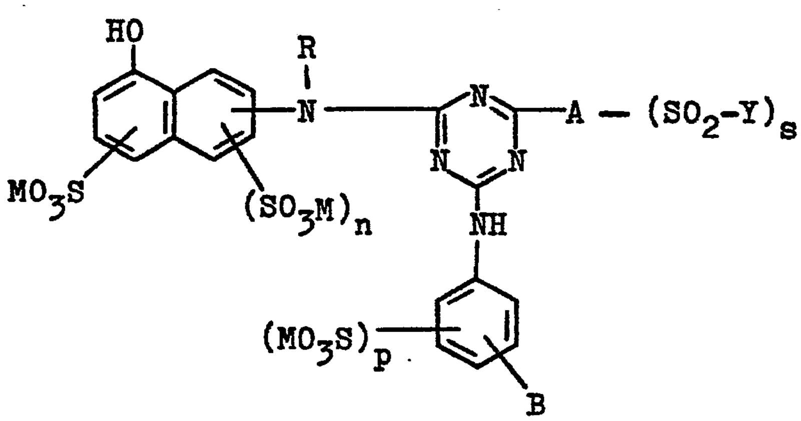

(8)

in welcher A, B, R, M, Y, n, p und s die obengenannten Bedeutungen haben, mit der Diazoniumverbindung eines aromatischen Amins der allgemeinen Formel (9)

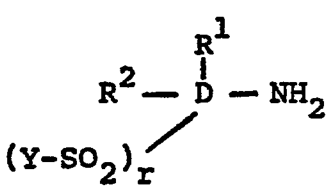

(9)

in welcher D, $R^1$, $R^2$, Y und r die obengenannten Bedeutungen haben, kuppelt, wobei man die Ausgangsverbindungen so auswählt, daß die Summe (r + s) die Bedeutung von m besitzt.

Diejenigen Verbindungen der allgemeinen Formel (6), bei denen der Formelrest X eine Gruppe der oben angegebenen allgemeinen Formel (4) bedeutet, in welcher M und p die angegebenen Bedeutungen haben, B jedoch einen Aminorest der oben genannten und definierten allgemeinen Formel (2g) darstellt, sind nicht nur Ausgangsverbindungen zur Herstellung der erfindungsgemäßen Azoverbindungen der allgemeinen Formel (1), sondern stellen auch erfindungsgemäß Endprodukte mit wertvollen faserreaktiven Farbstoffeigenschaften dar.

Die vorliegende Erfindung betrifft somit auch Azoverbindungen der allgemeinen Formel (1A)

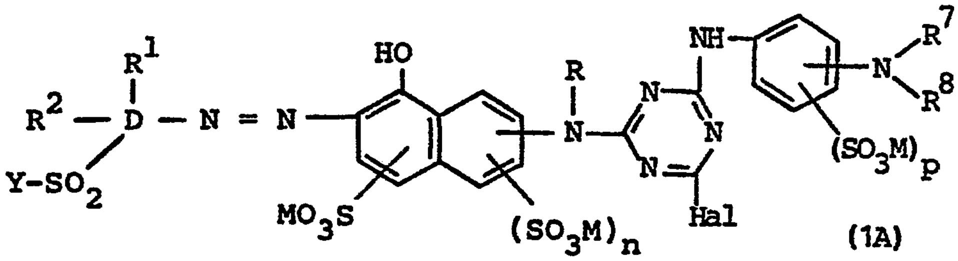

(1A)

in welcher D, M, $R^1$, $R^2$, R, Y, n, p, $R^7$, $R^8$ und Hal die oben genannten, insbesondere bevorzugten Bedeutungen haben, Hal jedoch bevorzugt ein Chloratom ist, sowie Verfahren zu deren Herstellung, wie später noch angegeben.

Die Verbindungen der allgemeinen Formel (6) können in erfindungsgemäßer Weise hergestellt werden, indem man eine Dihalogentriazinylamino-naphtholsulfonsäure-Verbindung der allgemeinen Formel (10)

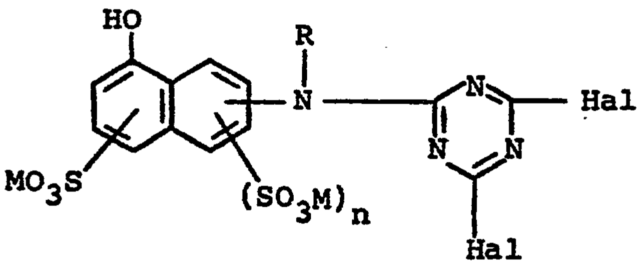

(10)

in welcher beide Hal die obengenannten Bedeutungen besitzen und zueinander gleich sind und M, R und n die obengenannten Bedeutungen haben, mit einem aromatischen Amin der allgemeinen Formel (4) zur Monohalogentriazinylamino-naphtholsulfonsäure-Verbindung der allgemeinen Formel (11)

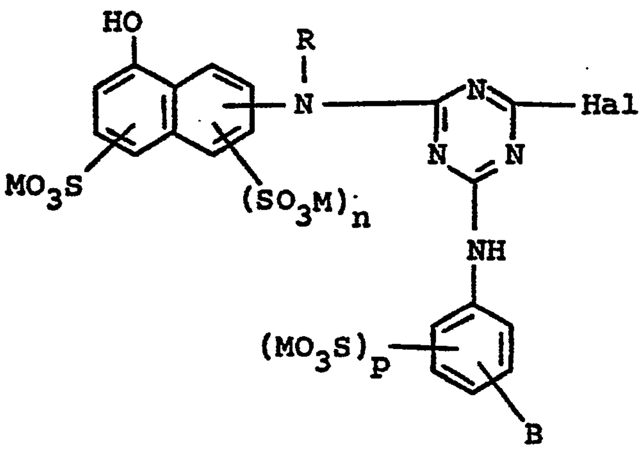

(11)

in welcher Hal, B, M, R, p und n die obengenannten Bedeutungen haben, umsetzt und diese mit der Diazoniumverbindung eines aromatischen Amins der allgemeinen Formel (9) zur Azoverbindung der Formel (6) mit X gleich dem Rest der Formel (4a) kuppelt, oder

daß man eine Dihalogentriazinylamino-naphtholsulfonsäure-Verbindung der obengenannten und definierten allgemeinen Formel (10) mit einer Verbindung der allgemeinen Formel (5) zur Monohalogentriazinylamino-naphtholsulfonsäure-Verbindung der allgemeinen Formel (12)

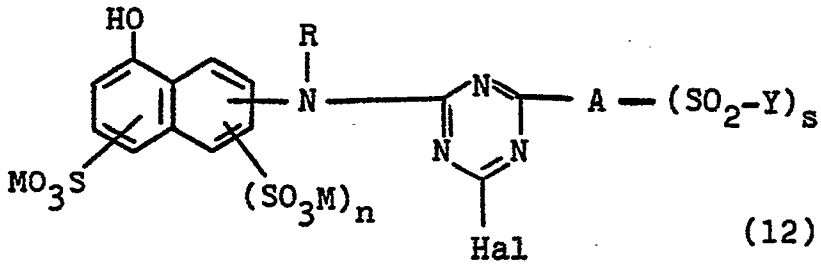

(12)

in welcher Hal, A, M, R, Y, n und s die obengenannten Bedeutungen haben, umsetzt, und diese mit der Diazoniumverbindung eines aromatischen Amins der allgemeinen Formel (9) zur Azoverbindung der allgemeinen Formel (6) mit X gleich dem Rest der Formel (5a) kuppelt, oder
daß man eine Dihalogentriazinylamino-naphtholsulfonsäure-Azoverbindung der allgemeinen Formel (13)

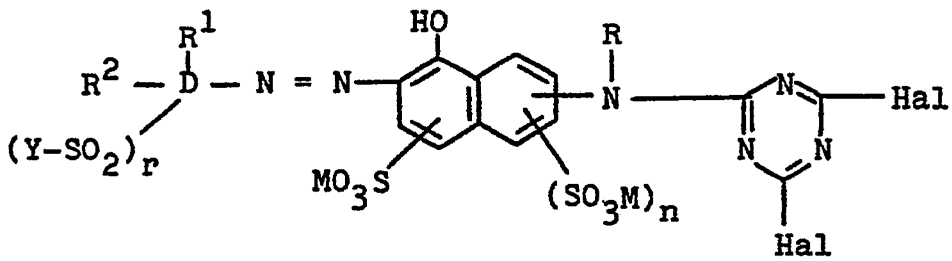

(13)

in welcher Hal, D, M, $R^1$, $R^2$, R, Y, n und r die obengenannten Bedeutungen haben, mit einer aromatischen Verbindung der allgemeinen Formel (4) oder einer Verbindung der allgemeinen Formel (5) umsetzt, oder
daß man eine Verbindung der allgemeinen Formel (5) zuerst mit Cyanurchlorid oder Cyanurfluorid kondensiert und das daraus erhaltene Produkt sodann mit einer Aminonaphtholsulfonsäure zur Monohalogen-triazinylamino-naphtholsulfonsäure-Verbindung der obengenannten und definierten allgemeinen Formel (12) umsetzt und diese mit der Diazoniumverbindung eines aromatischen Amins der allgemeinen Formel (9) zur Azoverbindung der allgemeinen Formel (6) mit X gleich dem Rest der Formel (5a) kuppelt.

In gleicher Weise können die erfindungsgemäßen Azoverbindungen der allgemeinen Formel (1A) hergestellt werden, indem man eine Monohalogentriazinylamino-naphtholsulfonsäure-Verbindung der allgemeinen Formel (11), in welcher B eine Aminogruppe der allgemeinen Formel (2g) bedeutet und Hal, M, R, p und n die obengenannten Bedeutungen haben, wobei Hal bevorzugt ein Chloratom ist, mit der Diazoniumverbindung eines aromatischen Amins der allgemeinen Formel (9), in welcher D, $R^1$, $R^2$ und Y die obengenannten Bedeutungen haben und r für die Zahl 1 steht, kuppelt, oder indem man eine Dihalogentriazinylamino-naphtholsulfonsäure-Azoverbindung der allgemeinen Formel (13), in welcher Hal die obengenannte Bedeutung besitzt, beide jedoch bevorzugt jeweils für ein Chloratom stehen, r die Zahl 1 bedeutet und D, $R^1$, $R^2$, R, M, Y und n die obengenannten Bedeutungen haben, mit einer aromatischen Verbindung der allgemeinen Formel (4), in welcher M und p die genannten Bedeutungen besitzen und B für eine Aminogruppe der allgemeinen Formel (2g) mit $R^7$ und $R^8$ der obengenannten Bedeutung steht, umsetzt.

Die Dihalogentriazinylamino-naphtholsulfonsäure-Azoverbindung der allgemeinen Formel (13) läßt such wiederum beispielsweise durch Kupplung der Diazoniumverbindung eines aromatischen Amins der allgemeinen Formel (9) mit einer Dihalogentriazinylaminonaphtholsulfonsäure der allgemeinen Formel (10) oder durch Umsetzung einer Aminoazoverbindung der allgemeinen Formel (3) mit Cyanurchlorid oder Cyanurfluorid herstellen. Solche Verfahrensweisen wie auch die genannten Ausgangsverbindungen sind an und für sich bekannt.

Ebenso können analog an und für sich bekannten Verfahrensweisen die Ausgangsverbindungen entsprechend der allgemeinen Formel (7) hergestellt werden, indem man Cyanurchlorid oder Cyanurfluorid in beliebiger Reihenfolge mit den Verbindungen der Formel (4) und (5) umsetzt. Die Ausgangsverbindungen der allgemeinen Formel (3) sind ebenso analog bekannten Verfahrensweisen durch Kupplung der Diazoniumverbindung eines aromatischen Amins der allgemeinen Formel (9) mit der aus der allgemeinen Formel (3) ableitbaren Aminonaphtholsulfonsäure erhältlich.

Sowohl die Umsetzung von Cyanurchlorid oder Cyanurfluorid mit einer Verbindung der allgemeinen Formel (4) oder (5) als auch die Umsetzung einer Dihalogentriazinylamino-naphtholsulfonsäure-Verbindung der allgemeinen Formel (10) mit einer Verbindung der Formel (4) oder (5) und ebenso die Umsetzung einer Dihalogentriazinylamino-naphtholsulfonsäure-Azoverbindung der allgemeinen Formel (13) mit

einer Verbindung der Formel (4) oder (5) kann in organischem oder wäßrig-organischem Medium erfolgen.

Vorzugsweise geschieht sie in wäßrigem Medium unter Zusatz säurebindender Mittel, wie Alkali- oder Erdalkalicarbonate, Alkali- oder Erdalkalihydrogencarbonaten oder -hydroxiden oder Alkaliacetaten oder einem basischen Alkaliphosphat, wobei die Alkali- und Erdalkalimetalle vorzugsweise solche des Natriums, Kaliums und Calciums sind. Weiterhin kann der Zusatz von geringen Mengen eines handelsüblichen Netzmittels zweckmäßig sein. Sofern dem wäßrigen Medium ein organisches, mit Wasser mischbares inertes Lösemittel zugesetzt wird, ist dies bevorzugt Aceton oder N-Methyl-pyrrolidon. Diese Kondensationsreaktionen werden bei einer Temperatur zwischen 0 und 90°C, vorzugsweise zwischen 0 und 60°C, und bei einem pH-Wert zwischen 1,5 und 7, insbesondere zwischen 2 und 5, durchgeführt.

In gleicher Weise kann die Umsetzung der Monohalogentriazin-Verbindung entsprechend der allgemeinen Formel (7) mit einer Aminonaphtholsulfonsäure-Azoverbindung der allgemeinen Formel (3) oder mit der Aminonaphtholsulfonsäure als naphtholischer Kupplungskomponente und ebenso die Umsetzung der Monohalogentriazin-Verbindung der allgemeinen Formel (6) mit einer Verbindung der allgemeinen Formel (4) oder (5) in wäßrig-organischem und vorzugsweise in wäßrigem Medium erfolgen. Vorzugsweise geschieht die Umsetzung in wäßrigem Medium unter Zusatz säurebindender Mittel, wie Alkali- oder Erdalkalicarbonate, Alkali- oder Erdalkalihydrogencarbonaten oder -hydroxiden oder Alkaliacetaten oder einem basischen Alkaliphosphat, wobei die Alkali- und Erdalkalimetalle vorzugsweise solche des Natriums, Kaliums und Calciums sind. Weiterhin kann der Zusatz von geringen Mengen eines handelsüblichen Netzmittels zweckmäßig sein. Sofern dem wäßrigen Medium ein organisches, mit Wasser mischbares inertes Lösenmittel zugesetzt wird, ist dies bevorzugt Aceton. Diese Kondensationsreaktionen werden bei einer Temperatur zwischen 0 und 90°C, vorzugsweise zwischen 50 und 90°C, und bei einem pH-Wert zwischen 3 und 9, insbesondere zwischen 5 und 7, durchgeführt.

Die erfindungsgemäße Kupplungsreaktion der Diazoniumverbindung eines Amins der Formel (9) mit einer Verbindung der allgemeinen Formel (8), (10), (11) oder (12) kann ebenfalls in wäßrig-organischem Medium erfolgen, vorzugsweise wird sie in wäßrigem Medium im schwach sauren bis neutralen, gegebenenfalls sehr schwach alkalischen pH-Bereich bei einer Temperatur zwischen 0 und 50°C durchgeführt. Vorzugsweise erfolgen die Kupplungsreaktionen bei einem pH-Wert zwischen 3 und 7 und einer Temperatur zwischen 5 und 20°C. Die an und für sich mögliche Kupplung im alkalischen Bereich sollte vermieden werden, um Schädigung der faserreaktiven Gruppe, insbesondere der entsprechend der allgemeinen Formel $-SO_2-Y$, zu vermeiden.

Ein weiteres erfindungsgemäßes Verfahren dient zur Herstellung von solchen erfindungsgemäßen Azoverbindungen der allgemeinen Formel (1), in welchen Y für die β-Sulfatoethyl-Gruppe steht; dieses ist dadurch gekennzeichnet, daß man eine Azoverbindung, die der allgemeinen Formel (1) entspricht, in welcher jedoch eines oder beide der Formelreste Y für eine β-Hydroxyethyl-Gruppe steht, in an und für sich bekannter Verfahrensweise mit einem Sulfatierungsmittel verestert. Sulfatierungsmittel sind beispielsweise 96 bis 100 %ige Schwefelsäure oder Schwefeltrioxid enthaltende Schwefelsäure oder Chlorsulfonsäure. Vorzugsweise wird 98 bis 100 %ige Schwefelsäure eingesetzt, wobei die Reaktionstemperatur zwischen 0 und 20°C gehalten wird.

Ein weiteres erfindungsgemäßes Verfahren dient zur Herstellung von solchen erfindungsgemäßen Azoverbindungen der allgemeinen Formel (1), in welchen Y für die β-Thiosulfatoethyl-Gruppe steht; dieses ist dadurch gekennzeichnet, daß man eine erfindungsgemäße Azoverbindung der allgemeinen Formel (1), die eine oder zwei β-Sulfatoethylsulfonyl-Gruppen enthält, nach an und für sich bekannten Verfahrensweisen in alkalisch-wäßrigem Medium, wie beispielsweise bei einem pH-Wert zwischen 8 und 12, insbesondere zwischen 9,5 und 10,5, und bei einer Temperatur zwischen 10 und 40°C zunächst in deren Vinylsulfonyl-Verbindung überführt und diese sodann nach Einstellung eines pH-Wertes zwischen 4 und 7 mit einem Alkalithiosulfat bei einer Temperatur zwischen 0 und 40°C umsetzt.

Aminoverbindungen der allgemeinen Formel (9), die in erfindungsgemäßer Weise zur Synthese der erfindungsgemäßen Verbindungen (1) und (1A) dienen und eine Gruppe der oben definierten Formel $-SO_2-Y$ enthalten, sind beispielsweise: 1-Amino-4-(β-sulfatoethylsulfonyl)-benzol, 1-Amino-3-(β-sulfatoethylsulfonyl)-benzol, 1-Amino-2-(β-sulfatoethylsulfonyl)-benzol, 1-Amino-2-methoxy-5-(β-sulfatoethylsulfonyl)-benzol, 1-Amino-2-methoxy-4-(β-sulfatoethylsulfonyl)-benzol, 1-Amino-4-methoxy-3-(β-sulfatoethylsulfonyl)-benzol, 1-Amino-2-hydroxy-5-(β-sulfatoethylsulfonyl)-benzol, 1-Amino-2-hydroxy-4-(β-sulfatoethylsulfonyl)-benzol, 1-Amino-2-methyl-4-(β-sulfatoethylsulfonyl)-benzol, 1-Amino-2-methyl-5-(β-sulfatoethylsulfonyl)-benzol, 1-Amino-4-methyl-3-(β-sulfatoethylsulfonyl)-benzol, 1-Amino-2-chlor-4-(β-sulfatoethylsulfonyl)-benzol, 1-Amino-2-chlor-5-(β-sulfatoethylsulfonyl)-benzol, 1-Amino-4-chlor-5-(β-sulfatoethylsulfonyl)-benzol, 1-Amino-2-brom-4-(β-sulfatoethylsulfonyl)-benzol, 1-Amino-2-carboxy-5-(β-sulfatoethylsulfonyl)-benzol, 1-Amino-2-carboxy-4-(β-sulfatoethylsulfonyl)-benzol, 1-Amino-2-sulfo-4-(β-sulfatoethylsulfonyl)-benzol, 1-Amino-2-sulfo-5-(β-sulfatoethylsulfonyl)-benzol, 1-Amino-2,5-dimethoxy-4-(β-sulfatoethylsulfonyl)-benzol, 1-Amino-2,4-dimethoxy-5-(β-sulfatoethylsulfonyl)-benzol, 1-Amino-2,5-diethoxy-4-(β-sulfatoethylsulfonyl)-benzol, 1-Amino-2-methoxy-5-methyl-4-(β-sulfatoethylsulfonyl)-benzol, 1-Amino-2-methyl-5-methoxy-4-(β-sulfatoethylsulfonyl)-benzol, 1-Amino-2,5-dimethyl-4-(β-sulfatoethylsulfonyl)-benzol, 1-Amino-2,4-disulfo-5-(β-sulfatoethylsulfonyl)-benzol, 2-Amino-1-sulfo-6-(β-sulfatoethylsulfonyl)-naphthalin, 2-Amino-6-sulfo-8-(β-sulfatoethylsulfonyl)-naphthalin, 1-Amino-6-sulfo-4-(β-sulfatoethylsulfonyl)-naphthalin, 1-Amino-

7-sulfo-5-(β-sulfatoethylsulfonyl)-naphthalin, 1-Amino-4-sulfo-6-(β-sulfatoethylsulfonyl)-naphthalin, 1-Amino-4-sulfo-7-(β-sulfatoethylsulfonyl)-naphthalin, 2-Amino-1-sulfo-5-(β-sulfatoethylsulfonyl)-naphthalin, 2-Amino-1,7-disulfo-5-(β-sulfatoethylsulfonyl)-naphthalin, 2-Amino-8-sulfo-6-(β-sulfatoethylsulfonyl)-naphthalin, 1-Amino-4-(β-sulfatoethylsulfonyl)-naphthalin, 1-Amino-5-(β-sulfatoethylsulfonyl)-naphthalin, 1-Amino-6-(β-sulfatoethylsulfonyl)-naphthalin, 1-Amino-7-(β-sulfatoethylsulfonyl)-naphthalin, 1-Amino-2-ethoxy-6-(β-sulfatoethylsulfonyl)-naphthalin, 2-Amino-5-(β-sulfatoethylsulfonyl)-naphthalin, 2-Amino-6-(β-sulfatoethylsulfonyl)-naphthalin, 2-Amino-7-(β-sulfatoethylsulfonyl)-naphthalin und 2-Amino-8-(β-sulfatoethylsulfonyl)-naphthalin sowie deren entsprechenden β-Thiosulfatoethylsulfonyl-, β-Phosphatoethylsulfonyl-, β-Chlorethylsulfonyl- und Vinylsulfonyl-Derivate.

Aromatische Aminoverbindungen der allgemeinen Formel (9), die erfindungsgemäß zur Herstellung der erfindungsgemäßen Verbindungen (1) dienen und die keine faserreaktive Gruppe entsprechend der allgemeinen Formel -$SO_2$-Y enthalten, sind beispielsweise:
1-Aminobenzol-2-sulfonsäure, 1-Aminobenzol-3- und -4-sulfonsäure, 2-Amino-4-sulfo-benzoesäure, 2-Amino-5-sulfo-benzoesäure, 4-Amino-2-sulfo-benzoesäure, 4-Aminotoluol-2- und -3-sulfonsäure, 2-Amino-toluol-4- und -5-sulfonsäure, 2-Amino-toluol-4-carbonsäure, Anthranilsäure, Anilin-, 2-, 3- und 4-Methylanilin, 2-, 3- und 4-Anisidin, 2-, 3- und 4-Chloranilin, 4-Amino-benzoesäure, 2-Amino-anisol-4- und -5-sulfonsäure, 4-Amino-anisol-2- und -3-sulfonsäure, 3-Chlor-2-aminotoluol-5-sulfonsäure, 4-Chlor-2-amino-toluol-5-sulfonsäure, 5-Chlor-2-amino-toluol-3- und -4-sulfonsäure, 6-Chlor-2-amino-toluol-4-sulfonsäure, 6-Chlor-3-amino-toluol-4-sulfonsäure, 1-Aminobenzol-2,5-disulfonsäure, 1-Aminobenzol-2,4- und -3,5-disulfonsäure, 2-Amino-toluol-3,5-disulfonsäure, 2-Amino-toluol-4,5- und -4,6-disulfonsäure, 4-Aminotoluol-2,5-disulfonsäure, 2-Aminonaphthalin-1-sulfonsäure, 2-Aminonaphthalin-5- und -6-sulfonsäure, 2-Aminonaphthalin-7- und -8-sulfonsäure, 1-Aminonaphthalin-2-, -3-, -4-, -5-, -6-, -7- und -8-sulfonsäure, 2-Aminonaphthalin-4,8-disulfonsäure, 2-Aminonaphthalin-6,8-disulfonsäure, 2-Aminonaphthalin-1,5- und -1,7-disulfonsäure, 2-Aminonaphthalin-5,7-, -3,6-, -3,7- und -4,7-disulfonsäure, 1-Aminonaphthalin-2,4-, -2,5-, -3,6-, -3,7-, -3,8-, -4,6-, -4,7-, -4,8-, -5,7- und -6,8-disulfonsäure, 2-Aminonaphthalin-3,6,8-trisulfonsäure, 2-Aminonaphthalin-4,6,8- und 1,5,7-trisulfonsäure, 1-Aminonaphthalin-2,4,7-trisulfonsäure, 1-Amino-naphthalin-2,4,8-, -3,5,7-, -3,6,8- und -4,6,8-trisulfonsäure.

Aminonaphtholsulfonsäuren, die zur Synthese der erfindungsgemäßen Azoverbindungen (1) und (1A) dienen und die, gegebenenfalls nach Überführung in deren Triazinylamino-Derivate, in ortho-Stellung zur Hydroxygruppe mit der Diazoniumverbindung des aromatischen Amins der allgemeinen Formel (9) gekuppelt werden, sind insbesondere 1-Amino-3,6-disulfo-8-naphthol, 1-Amino-4,6-disulfo-8-naphthol, 2-Amino-3,6-disulfo-8-naphthol, 3-Amino-6-sulfo-8-naphthol, 3-Amino-4,6-disulfo-8-naphthol, 3-Methylamino-6-sulfo-8-naphthol, 4-Amino-6-sulfo-8-naphthol, 2-Amino-6-sulfo-8-naphthol, 1-Amino-4-sulfo-8-naphthol und 2-Methylamino-6-sulfo-8-naphthol.

Verbindungen entsprechend der allgemeinen Formel (5), die als Ausgangsverbindungen zur Synthese der erfindungsgemäßen Azoverbindungen (1) dienen, sind beispielsweise:
1-Amino-4-(β-sulfatoethylsulfonyl)-benzol, 1-Amino-3-(β-sulfatoethylsulfonyl)-benzol, 1-Amino-2-(β-sulfatoethylsulfonyl)-benzol, 1-Amino-2-methoxy-5-(β-sulfatoethylsulfonyl)-benzol, 1-Amino-2-methoxy-4-(β-sulfatoethylsulfonyl)-benzol, 1-Amino-4-methoxy-3-(β-sulfatoethylsulfonyl)-benzol, 1-Amino-2-hydroxy-5-(β-sulfatoethylsulfonyl)-benzol, 1-Amino-2-hydroxy-4-(β-sulfatoethylsulfonyl)-benzol, 1-Amino-2-methyl-4-(β-sulfatoethylsulfonyl)-benzol, 1-Amino-2-methyl-5-(β-sulfatoethylsulfonyl)-benzol, 1-Amino-4-methyl-3-(β-sulfatoethylsulfonyl)-benzol, 1-Amino-2-chlor-4-(β-sulfatoethylsulfonyl)-benzol, 1-Amino-2-chlor-5-(β-sulfatoethylsulfonyl)-benzol, 1-Amino-4-chlor-5-(β-sulfatoethylsulfonyl)-benzol, 1-Amino-2-brom -4-(β-sulfatoethylsulfonyl)-benzol, 1-Amino-2-carboxy-5-(β-sulfatoethylsulfonyl)-benzol, 1-Amino-2-carboxy-4-(β-sulfatoethylsulfonyl)-benzol, 1-Amino-2-sulfo-4-(β-sulfatoethylsulfonyl)-benzol, 1-Amino-2-sulfo-5-(β-sulfatoethylsulfonyl)-benzol, 1-Amino-2,5-dimethoxy-4-(β-sulfatoethylsulfonyl)-benzol, 1-Amino-2,4-dimethoxy-5-(β-sulfatoethylsulfonyl)-benzol, 1-Amino-2,5-diethoxy-4-(β-sulfatoethylsulfonyl)-benzol, 1-Amino-2-methoxy-5-methyl-4-(β-sulfatoethylsulfonyl)-benzol, 1-Amino-2-methyl-5-methoxy-4-(β-sulfatoethylsulfonyl)-benzol, 1-Amino-2,5-dimethyl-4-(β-sulfatoethylsulfonyl)-benzol, 1-Amino-2,6-dibrom-4-(β-sulfatoethylsulfonyl)-benzol, 1-Amino-2,4-disulfo-5-(β-sulfatoethylsulfonyl)-benzol, 2-Amino-1-sulfo-6-(β-sulfatoethylsulfonyl)-naphthalin, 2-Amino-6-sulfo-8-(β-sulfatoethylsulfonyl)-naphthalin, 1-Amino-6-sulfo-4-(β-sulfatoethylsulfonyl)-naphthalin, 1-Amino-7-sulfo-5-(β-sulfatoethylsulfonyl)-naphthalin, 1-Amino-4-sulfo-6-(β-sulfatoethylsulfonyl)-naphthalin, 1-Amino-4-sulfo-7-(β-sulfatoethylsulfonyl)-naphthalin, 2-Amino-1-sulfo-5-(β-sulfatoethylsulfonyl)-naphthalin, 2-Amino-1,7-disulfo-5-(β-sulfatoethylsulfonyl)-naphthalin, 2-Amino-8-sulfo-6-(β-sulfatoethylsulfonyl)-naphthalin, 1-Amino-4-(β-sulfatoethylsulfonyl)-naphthalin, 1-Amino-5-(β-sulfatoethylsulfonyl)-naphthalin, 1-Amino-6-(β-sulfatoethylsulfonyl)-naphthalin, 1-Amino-7-(β-sulfatoethylsulfonyl)-naphthalin, 1-Amino-2-ethoxy-6-(β-sulfatoethylsulfonyl)-naphthalin, 2-Amino-5-(β-sulfatoethylsulfonyl)-naphthalin, 2-Amino-6-(β-sulfatoethylsulfonyl)-naphthalin, 2-Amino-7-(β-sulfatoethylsulfonyl)-naphthalin und 2-Amino-8-(β-sulfatoethylsulfonyl)-naphthalin sowie deren entsprechenden β-Thiosulfatoethylsulfonyl-, β-Phosphatoethylsulfonyl-, β-Chlorethylsulfonyl- und Vinylsulfonyl-Derivate, 1-Aminobenzol-2-sulfonsäure, 1-Aminobenzol-3- und -4-sulfonsäure, 2-Amino-4-sulfo-benzoesäure, 2-Amino-5-sulfo-benzoesäure, 4-Amino-2-sulfo-benzoesäure, 4-Aminotoluol-2- und -3-sulfonsäure, 2-Amino-toluol-4- und -5-sulfonsäure, 2-Amino-toluol-4-carbonsäure, Anthranilsäure, Anilin, 2-, 3- und 4-Methylanilin, 2-, 3- und 4-Anisidin, 2-, 3- und 4-Chloranilin, 4-Amino-benzoesäure, 2-Amino-anisol-4- und -5-sulfonsäure, 4-Amino-anisol-2- und -3-sulfonsäure, 3-Chlor-2-amino-toluol-5-sulfonsäure, 4-Chlor-2-amino-toluol-5-sulfonsäure, 5-Chlor-2-amino-toluol-3- und -4-sulfonsäure, 6-Chlor-2-amino-toluol-4-sulfonsäure, 6-Chlor-3-amino-toluol-4-sulfonsäure, 1-Aminobenzol-2,5-disulfonsäure, 1-Aminobenzol-2,4- und -3,5-disulfonsäure, 2-Amino-toluol-3,5-disulfonsäure, 2-Amino-toluol-4,5- und -4,6-disulfonsäure, 4-Aminotoluol-2,5-disulfonsäure, 2-(3'-Sulfo-4'-aminophenyl)-6-methyl-benzthiazol-7-sulfonsäure, 2-Aminonaphthalin-1-sulfonsäure, 2-Aminonaphthalin-5- und -6-sulfonsäure, 2-Aminonaphthalin-7- und -8-sulfonsäure, 1-Aminonaphthalin-2-, -3-, -4-, -5-, -6-, -7- und -8-sulfonsäure, 2-Aminonaphthalin-4,8-disulfonsäure, 2-Aminonaphthalin-6,8-disulfonsäure, 2-Aminonaphthalin-1,5- und -1,7-disulfonsäure, 2-Aminonaphthalin-5,7-, -3,6-, -3,7- und -4,7-disulfonsäure, 1-Aminonaphthalin-2,4-, -2,5-, -3,6-, -3,7-, -3,8-, -4,6-, -4,7-, -4,8-, -5,7- und -6,8-disulfonsäure, 2-Aminonaphthalin-3,6,8-trisulfonsäure, 2-Aminonaphthalin-4,6,8- und -1,5,7-trisulfonsäure, 1-Aminonaphthalin-2,4,7-trisulfonsäure, 1-Amino-naphthalin-2,4,8-, -3,5,7-, -3,6,8- und -4,6,8-trisulfonsäure, Ethylamin, Ethanolamin, Taurin, Methyltaurin, Bis-[β-(β'-chlorethylsulfonyl)-ethyl]-amin, Aminoessigsäure, Diethanolamin, Phenol, Methanol, Ethanol, n-Propanol, iso-Propanol und Wasser.

Aromatische Amine entsprechend der allgemeinen Formel (4), die erfindungsgemäß als Ausgangsverbindungen zur Herstellung der erfindungsgemäßen Azoverbindungen (1) und (1A) dienen, sind beispielsweise:
2-Aminoacetanilid, 3-Aminoacetanilid, 4-Aminoacetanilid, 1,2-Phenylendiamin, 1,3-Phenylendiamin, 1,4-Phenylendiamin, 2-Formylamino-anilin, 3-Formylamino-anilin, 4-Formyl-amino-anilin, 2-Propionylamino-anilin, 3-Propionylamino-anilin, 4-Propionylamino-anilin, 4-Benzoylamino-anilin, 1,2-Phenylendiamin-3-sulfonsäure, 1,2-Phenylendiamin-4-sulfonsäure, 1,4-Phenylendiamin-2-sulfonsäure, 1,4-Phenylendiamin-2,5-disulfonsäure, 4-Acetylamino- oder 4-Benzoylamino-3-sulfoanilin, 4-Acetylamino- oder 4-Benzoylamino-2-sulfo-anilin, 4-Acetylamino- oder 4-Benzoylamino-2,5-disulflo-anilin, 4-Aminodiphenylamin, 4-Amino-3'-sulfo-diphenylamin, 4-Amino-2-sulfo-diphenylamin, 2-Amino-4-sulfo-diphenylamin, N-Tolyl-1,4-phenylendiamin-3-sulfonsäure, N-Chlorphenyl-1,4-phenylendiamin-3-sulfonsäure, 4-Amino-2'-sulfo-4'-nitro-diphenylamin, N-Methyl- oder N-Ethyl-4-amino-2-sulfodiphenylamin, N-Methyl- oder N-Ethyl-2-amino-4-sulfodiphenylamin, 4-Ethylamino-anilin, 4-Methylamino-anilin, 4-Dimethylamino-anilin, 4-Diethylamino-anilin, 4-Amino-4'-nitro-2'-sulfo-diphenylamin, 4-Di-(n-butyl)-amino-anilin, 4-Ethylamino- oder 4-Methylamino-2-sulfo-anilin, 4-Methylamino- oder 4-Ethylamino-3-sulfo-anilin, 4-Dimethylamino- oder 4-Diethylamino-2-sulfo-anilin, 4-Dimethylamino- oder 4-Diethylamino-3-sulfoanilin, 4-Methylamino- oder 4-Ethylamino-2,5-disulfo-anilin, 4-Dimethylamino- oder 4-Diethylamino-2,5-disulfo-anilin, 2,4-Dimethoxy-anilin, 3,4-Dimethoxy-anilin, 2-Ethoxy-anilin, 4-Ethoxy-anilin, 2-Methoxy-anilin, 4-Methoxy-anilin, 2-Aminophenol, 4-Aminophenol, 2-Aminodiphenylether, 4-Aminodiphenylether, 4-Methoxy-3-sulfo-anilin, 4-Ethoxy-3-sulfo-anilin, 4-Amino-3-sulfodiphenylether, 4,4'-Diamino-diphenyl-2-sulfonsäure, N-(ω-Sulfo-acetyl)-1,4-diamino-benzol und N-(ω-Sulfo-propionyl)-1,4-diamino-benzol.

Die Abscheidung der erfindungsgemäß hergestellten Verbindungen aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Die neuen erfindungsgemäßen Verbindungen (1) und (1A) haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls nach Konzentrierung, direkt als flüssigpräparation der färberischen Verwendung zugeführt werden.

Gegenstand der vorliegenden Erfindung ist deshalb auch die Verwendung der erfindungsgemäßen Verbindungen der allgemeinen Formel (1) oder der allgemeinen Formel (1A) zum Färben von hydroxy- und carbonamidgruppenhaltigen Materialien bzw. Verfahren zu deren Anwendung auf diesen Substraten. Eingeschlossen sind hierbei die Massefärbung, beispielsweise von Folien aus Polyamid, und die Färbung durch Bedrucken. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Verbindungen lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bei Temperaturen zwischen 40 und 105°C, gegebenenfalls bei Temperaturen bis zu 130°C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, - die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, - farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen.
Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat, Dinatriumhydrogenphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Äthylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den erfindungsgemäßen Azoverbindungen hergestellten Färbungen und Drucke auf Cellulosefasermaterialien besitzen eine hohe Farbstärke, außerdem gute Lichtechtheiten und sehr gute Naßechtheiten, wie Wasch-, Walk-, Wasser-, Seewasser-, Überfärbe- und Schweißechtheiten, darüber hinaus eine gute Plissierechtheit, Bügelechtheit und Reibechtheit. Besonders hervorzuheben sind deren alkalische Schweißlichtechtheit und die gute Naßlichtechtheit der mit Trinkwasser benetzten Färbungen. In dieser Beziehung sind die erfindungsgemäßen Azoverbungen konstitutionell nächstvergleichbaren Azofarbstoffen überlegen, die als Reaktivgruppe ebenfalls eine Vinylsulfon-Gruppe an das Farbstoffmolekül gebunden enthalten.

Die nachstehenden Beispiele dienen zur Erläuterung der Erfindung. Die formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso

können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden. Die in den Beispielen genannten Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

Beispiel 1

a) 295 Teile 4-(β-Sulfatoethylsulfonyl)-anilin werden mit 56 Teilen wasserfreiem Natriumcarbonat in 500 Teilen Wasser gelöst und in eine Suspension von 194 Teilen 2,4,6-Trichlor-1,3,5-triazin in 500 Teilen Eis und 500 Teilen Wasser eingerührt. Man rührt bei 0 bis 10°C unter Einhaltung eines pH-Wertes von 4,5 bis zur beendeten Kondensationsreaktion nach und gibt sodann 319 Teile 1-Amino-3,6-disulfo-8-naphthol hinzu, stellt mit Natriumcarbonat einen pH-Wert von 4,5 ein und erwärmt den Ansatz unter Einhaltung dieses pH-Wertes auf 50°C. Man rührt noch einige Zeit unter diesen Bedingungen bis zur beendeten Kondensationsreaktion nach und filtriert den Ansatz von ungelösten Anteilen ab.

b) Eine Suspension von 173,2 Teilen 2-Sulfo-anilin in 750 Teilen Eiswasser wird mit Schwefelsäure auf einen pH-Wert von 2 gestellt; die Diazotierung erfolgt mit 200 Volumenteilen einer wäßrigen 5n-Natriumnitritlösung unter Einhaltung des pH-Wertes von 2 mittels Schwefelsäure. Man rührt noch 1 Stunde nach und entfernt überschüssige salpetrige Säure in üblicher Weise mit Amidosulfonsäure.

c) Die unter b) hergestellte Diazoniumsalzsuspension wird in die unter a) hergestellte Lösung der Kupplungskomponente eingerührt, wobei man einen pH-Wert zwischen 5 und 6 einstellt und bis zur beendeten Kupplungsreaktion hält. Anschließend erwärmt man den Ansatz auf 60°C und gilbt 150 Teile 4-Acetylamino-anilin unter Rühren allmählich hinzu und hält den pH-Wert von 6 und die Temperatur von 60 bis 65°C noch etwa 3 Stunden, bis die Kondensationsreaktion beendet ist.

Die erfindungsgemäße Azoverbindung wird aus der Reaktionslösung nach üblicher Klärung entweder durch Sprühtrocknung oder durch Aussalzen mit Natriumchlorid isoliert. Es wird ein rotes, Elektrolytsalze (wie Natriumchlorid und Natriumsulfat) enthaltendes Produkt des Natriumsalzes der erfindungsgemäßen Verbindung der Formel

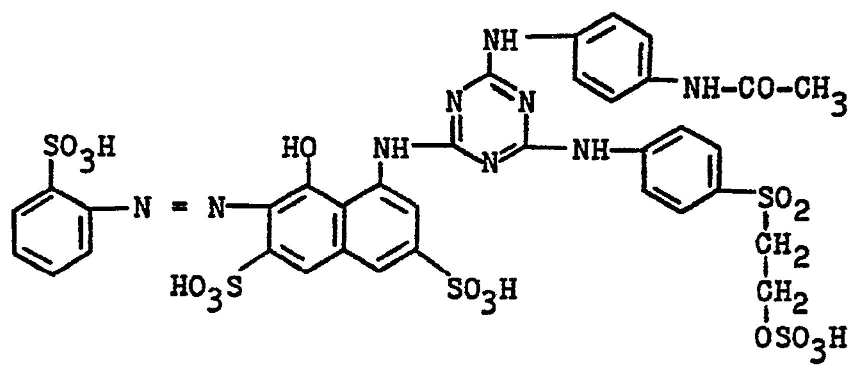

erhalten, das sehr gute Farbstoffeigenschaften besitzt und in wäßriger Lösung im sichtbaren Bereich ein Absorptionsmaximum bei 535 nm zeigt. Die erfindungsgemäße Verbindung (in Form ihres Alkalimetallsalzes) färbt Cellulosefasermaterialien nach den für faserreaktive Farbstoffe üblichen Applikations- und Fixiermethoden in kräftigen, klaren, schwach gelbstichig roten Tönen. Die mit der erfindungsgemäßen Verbindung erhältlichen Färbungen und Drucke zeigen sehr gute Naßechtheitseigenschaften, wie insbesondere sehr gute Waschechtheiten, gute Naßlichtechtheiten und insbesondere eine gute alkalische Schweißlichtechtheit.

Beispiel 2

190 Teile Cyanurchlorid werden in 500 Teilen Eis und 500 Teilen Wasser suspendiert, sodann werden 319 Teile 1-Amino-3,6-disulfo-8-naphthol unter Rühren eingetragen. Unter weiterem Rühren bei einer Temperatur zwischen 0 und 8°C wird mittels etwa 120 Teilen Natriumcarbonat ein pH-Wert zwischen 2 und 2,5 gehalten. Es entsteht eine Lösung, die geklärt werden kann.

Zu ihr gibt man eine gemäß Beispiel 1b) hergestellte Diazoniumsalzsuspension aus 173,2 Teilen 2-Sulfoanilin, rührt den Ansatz unter Einhaltung eines pH-Wertes von 5,5 bis zur beendeten Kupplung nach, gibt sodann eine Lösung mit einem pH-Wert von 4,5 von 295 Teilen 3-(β-Sulfatoethylsulfonyl)-anilin in 350 Teilen Wasser hinzu, erwärmt den Reaktionsansatz unter Einhaltung eines pH-Wertes von 4,5 auf 40 bis 45°C und rührt unter diesen Bedingungen bis zur Beendigung der Kondensationsreaktion nach. Anschließend gibt man 150 Teile 4-Acetylamino-anilin hinzu, rührt noch 3 bis 4 Stunden bei einem pH-Wert von 6,0 und einer Temperatur von 60 bis 65°C nach und isoliert die erfindungsgemäße Verbindung durch Sprühtrocknung oder Aussalzen.

Man erhält, in Form eines elektrolythaltigen Pulvers, das Natriumsalz der Verbindung der Formel

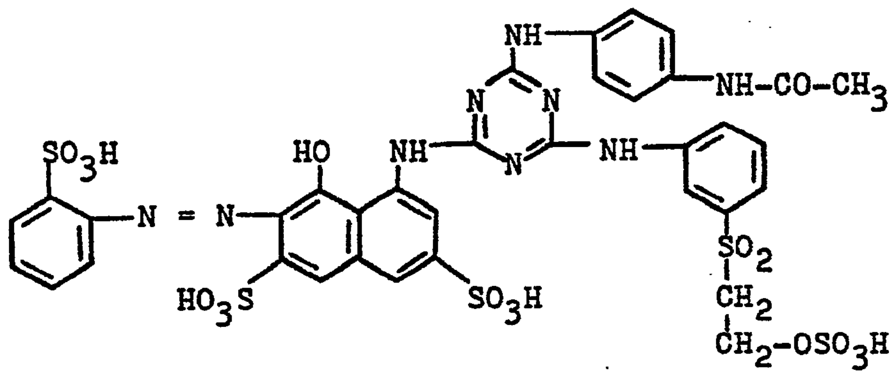

Die erfindungsgemäße Verbindung besitzt sehr gute faserreaktive Farbstoffeigenschaften und zeigt in wäßriger Lösung im sichtbaren Bereich ein Absorptionsmaximum bei 535 nm. Sie liefert wie die Verbindung des Beispieles 1 auf Cellulosefasermaterialien gleichermaßen gute Färbungen und Drucke mit schwach gelbstichig roter Nuance.

Beispiel 3

Eine neutrale Lösung von 319 Teilen 1-Amino-3,6-disulfo-8-naphthol in 500 Teilen Wasser und 500 Teilen Eis wird unter gutem Rühren im Laufe von 5 Minuten mit 142 Teilen 2,4,6-Trifluor-1,3,5-triazin versetzt. Nach 30 Minuten gibt man eine neutrale Lösung von 180 Teilen 3-Sulfoanilin in 350 Teilen Wasser hinzu und führt die zweite Kondensationsreaktion bei einer Temperatur zwischen 20 und 35°C und einem pH-Wert von 4,5 durch.

Zu diesem Ansatz gibt man eine Diazoniumsalzsuspension, die in üblicher Weise durch Diazotierung einer mit Schwefelsäure angesäuerten Lösung von 289 Teilen 4-(β-Sulfatoethylsulfonyl)-anilin in etwa 1200 Teilen Wasser von 0 bis 5°C hergestellt worden war. Die Kupplungsreaktion erfolgt bei einem pH-Wert von 4,5. Nach beendeter Kupplung wird der Ansatz auf 55°C erwärmt, mit 150 Teilen 4-Acetylaminoanilin versetzt und bis zur Beendigung der Kondensationsreaktion (etwa 3 Stunden) bei 55 bis 60°C und einem pH-Wert von 6 nachgerührt. Der Ansatz wird anschließend warm geklärt und die erfindungsgemäße Verbindung durch Sprühtrocknung isoliert.

Es wird ein rotes, elektrolythaltiges Pulver des Natriumsalzes der Verbindung der Formel

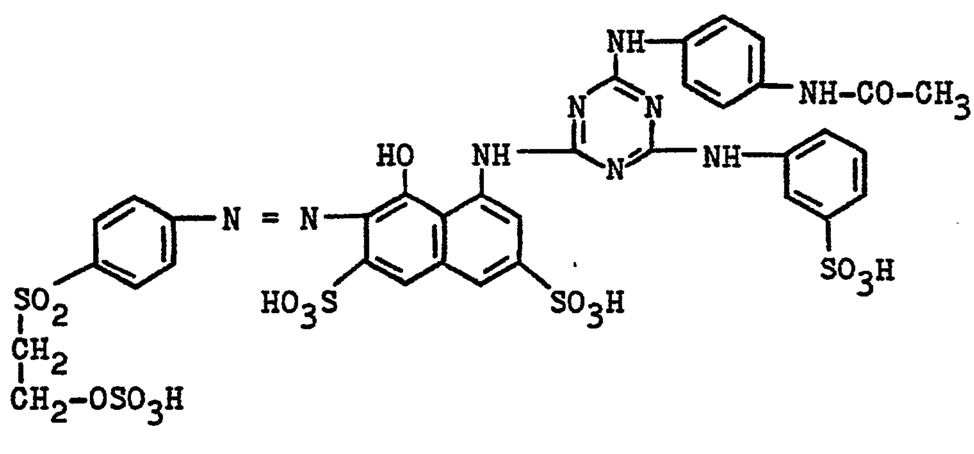

erhalten. Diese erfindungsgemäße Verbindung besitzt sehr gute faserreaktive Farbstoffeigenschaften und liefert auf Cellulosefasermaterialien nach den für faserreaktive Farbstoffe üblichen Applikations- und Fixiermethoden Färbungen und Drucke in kräftigen, klaren, blaustichig roten Tönen, die sehr gute Naßechtheitseigenschaften, wie insbesondere sehr gute Waschechtheiten, gute Naßlichtechtheiten und insbesondere eine gute alkalische Schweißlichtechtheit aufweisen.

Beispiele 4 bis 92 (hiervon Beispiele 6, 23, 42 und 49 gestrichen)

In den nachfolgenden Tabellenbeispielen sind weitere erfindungsgemäße Verbindungen mit Hilfe ihrer Komponenten entsprechend einer allgemeinen Formel (A)

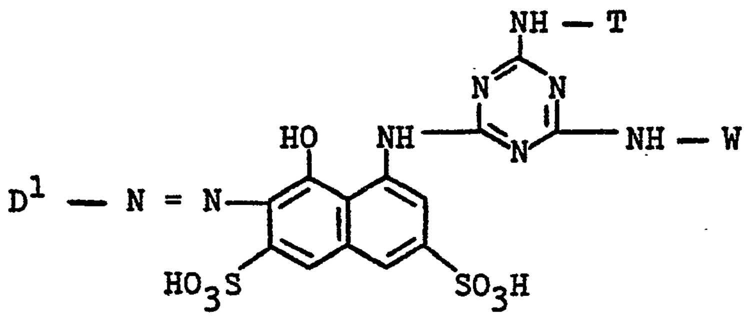

(A)

beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (A) ersichtlichen Komponenten (der Diazokomponente $D^1$-$NH_2$, Cyanurchlorid oder Cyanurfluorid, bevorzugt Cyanurchlorid, 1-Amino-3,6-disulfo-8-naphthol und den an den Triazinrest ankondensierbaren Aminoverbindungen entsprechend den allgemeinen Formeln $H_2N$-T und $H_2N$-W ) herstellen. Sie besitzen faserreaktive Farbstoffeigenschaften und liefern insbesondere auf Cellulosefasermaterialien nach den für den faserreaktive Farbstoffen üblichen Applikations- und Fixiermethoden farbstarke, echte Färbungen und Drucke in den in dem jeweiligen Tabellenbeispiel für Färbungen auf Baumwolle angegebenen Farbtönen.

| Bsp. | Verbindung der Formel (A) mit | | | Farbton |
|---|---|---|---|---|
| | $D^1$ gleich ... | T gleich ... | W gleich ... | |
| 4 | 2-Sulfophenyl | 3-Sulfo-4-amino-phenyl | 4-(β-Sulfatoethyl-sulfonyl)-phenyl | blaustichig rot |
| 5 | dito | 2,5-Disulfo-4-amino-phenyl | dito | gelbstichig rot |
| 7 | dito | 4-(3'-Sulfophenylamino)-phenyl | dito | blaustichig rot |
| 8 | dito | 3-Sulfo-4-(phenylamino)-phenyl | dito | dito |
| 9 | dito | 3-Sulfo-4-(4'-methyl-phenyl-amino)-phenyl | dito | dito |
| 10 | dito | 4-Methoxy-phenyl | dito | dito |
| 11 | dito | 4-Hydroxy-phenyl | dito | gelbstichig rot |
| 12 | dito | 3-Sulfo-4-hydroxy-phenyl | dito | dito |
| 13 | dito | 4-Ureido-phenyl | dito | dito |
| 14 | dito | 4-Amino-phenyl | 2,5-Dimethoxy-4-(β-Sulfato-ethylsulfonyl)-phenyl | blaustichig rot |
| 15 | dito | 4-Acetylamino-phenyl | dito | dito |
| 16 | dito | 4-Formylamino-phenyl | dito | dito |
| 17 | dito | 3-Sulfo-4-amino-phenyl | dito | dito |
| 18 | dito | 2,5-Disulfo-4-amino-phenyl | dito | dito |
| 19 | dito | 3-Sulfo-4-(phenylamino)-phenyl | dito | dito |
| 20 | dito | 3-Sulfo-4-(4'-methyl-phenyl-amino)-phenyl | dito | blaustichig rot |
| 21 | dito | 4-Hydroxy-phenyl | dito | dito |
| 22 | dito | 3-Sulfo-4-hydroxy-phenyl | dito | dito |
| 24 | 2-Carboxy-5-sulfo-phenyl | 4-Acetylamino-phenyl | 4-(β-Sulfato-ethylsulfonyl)-phenyl | gelbstichig rot |
| 25 | dito | 3-Sulfo-4-amino-phenyl | dito | dito |
| 26 | dito | 3-Sulfo-4-(phenylamino)-phenyl | dito | dito |
| 27 | dito | 3-Sulfo-4-(3'-chloro-phenyl-amino)-phenyl | dito | dito |
| 28 | dito | 4-hydroxy-phenyl | dito | dito |
| 29 | 2-Sulfo-4-methyl-phenyl | 3-Sulfo-4-amino-phenyl | dito | blaustichig rot |
| 30 | dito | 2,5-Disulfo-4-amino-phenyl | dito | dito |
| 31 | dito | 3-Sulfo-4-(phenylamino)-phenyl | dito | dito |
| 32 | dito | 4-Acetylamino-phenyl | dito | dito |
| 33 | 4-Chloro-2-sulfo-5-methyl-phenyl | 4-Amino-phenyl | dito | gelbstichig rot |
| 34 | dito | 4-Acetylamino-phenyl | dito | dito |
| 35 | dito | 3-Sulfo-4-amino-phenyl | dito | dito |
| 36 | dito | 3-Sulfo-4-(phenylamino)-phenyl | dito | dito |
| 37 | dito | 2,5-Disulfo-4-amino-phenyl | dito | dito |
| 38 | 2,5-Disulfophenyl | 4-Amino-phenyl | dito | dito |
| 39 | dito | 4-Acetylamino-phenyl | dito | dito |
| 40 | dito | 4-Formylamino-phenyl | dito | dito |
| 41 | dito | 4-Benzoylamino-phenyl | dito | dito |

| Bsp. | Verbindung der Formel (A) mit | | | Farbton |
|---|---|---|---|---|
| | D[1] gleich ... | T gleich ... | W gleich ... | |
| 43 | 2,5-Disulfophenyl | 3-Sulfo-4-acetyl-amino-phenyl | 4-(β-Sulfato-ethyl-sulfonyl)-phenyl | gelbstichig rot |
| 44 | dito | 4-(Phenylamino)-phenyl | dito | rot |
| 45 | dito | 3-Sulfo-4-(phenylamino)-phenyl | dito | rot |
| 46 | dito | 2,4-Dimethoxy-phenyl | dito | blaustichig rot |
| 47 | dito | 4-Hydroxy-phenyl | dito | gelbstichig rot |
| 48 | dito | 4-(Phenoxy)-phenyl | dito | dito |
| 50 | dito | 3-Sulfo-4-(4'-aminophenyl)-phenyl | dito | dito |
| 51 | 1-Sulfo-naphth-2-yl | 3-Sulfo-4-amino-phenyl | dito | blaustichig rot |
| 52 | dito | 2,5-Disulfo-4-amino-phenyl | dito | dito |
| 53 | dito | 2-Sulfo-4-acetylamino-phenyl | dito | dito |
| 54 | dito | 3-Sulfo-4-(phenylamino)-phenyl | dito | dito |
| 55 | dito | 3-Sulfo-4-hydroxy-phenyl | dito | dito |
| 56 | 1,5-Disulfo-naphth-2-yl | 4-Amino-phenyl | dito | dito |
| 57 | dito | 4-Acetylamino-phenyl | dito | dito |
| 58 | dito | 4-Formylamino-phenyl | dito | dito |
| 59 | dito | 4-Benzoylamino-phenyl | dito | dito |
| 60 | dito | 3-Sulfo-4-amino-phenyl | dito | dito |
| 61 | dito | 2-Sulfo-4-acetylamino-phenyl | dito | dito |
| 62 | dito | 4-(Phenylamino)-phenyl | dito | dito |
| 63 | dito | 3-Sulfo-4-(phenylamino)-phenyl | dito | dito |
| 64 | dito | 4-Hydroxy-phenyl | dito | dito |
| 65 | dito | 4-Methoxy-phenyl | dito | dito |
| 66 | 1,5,7-Trisulfo-naphth-2-yl | 4-Acetylamino-phenyl | dito | dito |
| 67 | dito | 4-Amino-phenyl | dito | dito |
| 68 | dito | 4-(Phenylamino)-phenyl | dito | dito |
| 69 | 2-Sulfo-phenyl | 4-Amino-phenyl | dito | gelbstichig rot |
| 70 | dito | 4-Formylamino-phenyl | dito | dito |
| 71 | 1,5-Disulfo-naphth-2-yl | 4-Acetylamino-phenyl | 3-(β-Sulfato-ethylsulfonyl)-phenyl | blaustichig rot |
| 72 | 2-Sulfo-phenyl | 3-Sulfo-4-(phenylamino)-phenyl | dito | dito |
| 73 | dito | 3-Sulfo-4-amino-phenyl | dito | dito |
| 74 | 2,5-Disulfo-phenyl | dito | dito | gelbstichig rot |
| 75 | dito | 3-Sulfo-4-(phenylamino)-phenyl | dito | dito |
| 76 | dito | 4-N-(3'-Sulfo-phenyl)-amino-phenyl | dito | dito |
| 77 | dito | 3-Sulfo-4-hydroxy-phenyl | dito | dito |
| 78 | 3-Sulfo-4-methyl-phenyl | dito | dito | dito |
| 79 | dito | 3-Sulfo-4-(phenylamino)-phenyl | dito | blaustichig rot |

| Bsp. | Verbindung der Formel (A) mit | | | Farbton |
|---|---|---|---|---|
| | $D^1$ gleich ... | T gleich ... | W gleich ... | |
| 80 | 3-Sulfo-4-methyl-phenyl | 3-Sulfo-4-amino-phenyl | 3-(β-Sulfato-ethylsulfonyl)-phenyl | blaustichig rot |
| 81 | 4-(β-Sulfato-ethyl-sulfonyl)-phenyl | 4-Acetylamino-phenyl | 2,5-Disulfo-phenyl | dito |
| 82 | dito | 3-Sulfo-4-(phenylamino)-phenyl | 3-Sulfo-phenyl | dito |
| 83 | dito | 4-Hydroxy-phenyl | dito | dito |
| 84 | dito | 3-Sulfo-4-(phenylamino)-phenyl | 4-(β-Sulfato-ethylsulfonyl)-phenyl | dito |
| 85 | dito | 3-Sulfo-4-amino-phenyl | dito | dito |
| 86 | 3-(β-Sulfato-ethyl-sulfonyl)-phenyl | dito | dito | dito |
| 87 | dito | 3-Sulfo-4-(phenylamino)-phenyl | dito | dito |
| 88 | dito | dito | 3-(β-Sulfato-ethylsulfonyl)-phenyl | dito |
| 89 | dito | dito | 3-Sulfo-phenyl | dito |
| 90 | dito | 4-Acetylamino-phenyl | dito | dito |
| 91 | dito | dito | 2,5-Disulfo-phenyl | dito |
| 92 | 2-Sulfo-5-(β-Sulfato-ethyl-sulfonyl)-phenyl | dito | 3-Sulfo-phenyl | dito |

Beispiele 93 bis 104

In den nachfolgenden Tabellenbeispielen sind weitere erfindungsgemäße Verbindungen mit Hilfe ihrer Komponenten entsprechend einer allgemeinen Formel (B)

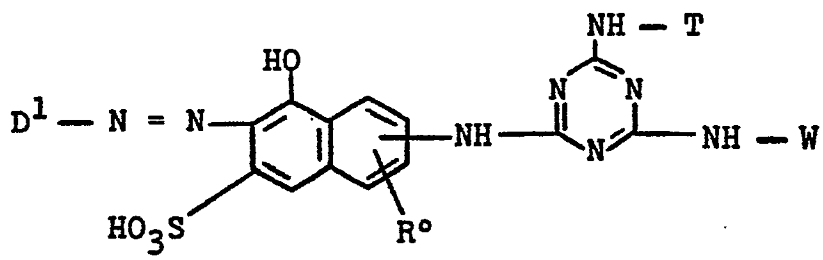

(B)

mit $R^0$ gleich einem Wasserstoffatom oder einer Sulfogruppe beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (B) ersichtlichen Komponenten (der Diazokomponente $D^1$-$NH_2$ , Cyanurchlorid oder Cyanurfluorid, bevorzugt Cyanurchlorid, der Amino-naphthol-sulfonsäure und den an den Triazinrest ankondensierbaren Aminoverbindungen entsprechend den allgemeinen Formeln $H_2N$-T und $H_2N$-W ) herstellen. Sie besitzen faserreaktive Farbstoffeigenschaften und liefern insbesondere auf Cellulosefasermaterialien nach den für den faserreaktive Farbstoffen üblichen Applikations- und Fixiermethoden farbstarke, echte Färbungen und Drucke in den in dem jeweiligen Tabellenbeispiel für Färbungen auf Baumwolle angegebenen Farbtönen.

| Bsp. | Verbindung der Formel (B) mit | | | | Farbton |
|---|---|---|---|---|---|
| | $D^1$ gleich ... | Aminonaphthol-sulfonsäure | T gleich ... | W gleich ... | |
| 93 | 1,5-Disulfo-naphthyl-2-yl | 1-Amino-4,6-disulfo-8-naphthol | 4-Acetyl-amino-phenyl | 3-(β-Sulfatoethyl-sulfonyl)-phenyl | gelbstichig rot |
| 94 | 2-Sulfo-phenyl | dito | dito | dito | dito |
| 95 | dito | dito | 3-Sulfo-(phenyl-amino)-phenyl | dito | dito |
| 96 | 2,5-Disulfo-phenyl | 3-Amino-6-sulfo-8-naphthol | 3-Sulfo-4-amino-phenyl | dito | goldgelb |
| 97 | dito | dito | 3-Sulfo-4-(phenyl-amino)-phenyl | dito | dito |
| 98 | dito | dito | 2,5-Disulfo-4-amino-phenyl | dito | dito |
| 99 | 3-Sulfo-methoxy-phenyl | dito | dito | dito | scharlach |
| 100 | dito | dito | 3-Sulfo-4-(phenyl-amino)-phenyl | dito | dito |
| 101 | dito | dito | dito | 4-(β-Sulfatoethyl-sulfonyl)-phenyl | dito |
| 102 | 4-(β-Sulfato-ethyl-sulfonyl)-phenyl | 1-Amino-4,6-disulfo-8-naphthol | 4-Acetylamino-phenyl | 3-Sulfo-phenyl | blaustichig rot |
| 103 | dito | dito | 3-Sulfo-4-(phenyl-amino)-phenyl | dito | dito |
| 104 | dito | dito | dito | 4-(β-Sulfatoethyl-sulfonyl)-phenyl | dito |

Beispiele 105 bis 108

In den nachfolgenden Tabellenbeispielen sind weitere erfindungsgemäße Verbindungen mit Hilfe ihrer Komponenten entsprechend einer allgemeinen Formel (C)

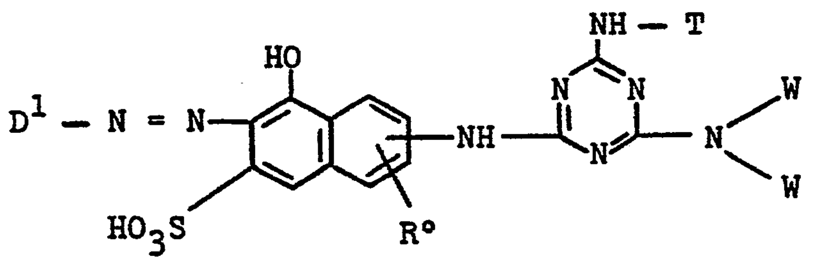

(C)

mit $R^0$ gleich einem Wasserstoffatom oder einer Sulfogruppe beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (C) ersichtlichen Komponenten (der Diazokomponente $D^1$-$NH_2$ , Cyanurchlorid oder Cyanurfluorid, bevorzugt Cyanurchlorid, der Amino-naphthol-sulfonsäure und den an den Triazinrest ankondensierbaren Aminoverbindungen entsprechend den allgemeinen Formeln $H_2N$-T und $HN(W)_2$ ) herstellen. Sie besitzen faserreaktive Farbstoffeigenschaften und liefern insbesondere auf Cellulosefasermaterialien nach den für den faserreaktive Farbstoffen üblichen Applikations- und Fixiermethoden farbstarke, echte Färbungen und Drucke in den in dem jeweiligen Tabellenbeispiel für Färbungen auf Baumwolle angegebenen Farbtönen.

| Bsp. | Verbindung der Formel (B) mit | | | | Farbton |
|---|---|---|---|---|---|
| | $D^1$ gleich ... | Aminonaphthol-sulfonsäure | T gleich ... | W gleich ... | |
| 105 | 2-Sulfo-phenyl | 1-Amino-3,6-disulfo-8-naphthol | 4-Acetylamino-phenyl | β-(β'-Chlorethyl-sulfonyl)-ethyl | gelbstichig rot |
| 106 | 1,5-Disulfo-naphth-2-yl | dito | dito | dito | blaustichig rot |
| 107 | 2-Sulfo-phenyl | dito | 3-Sulfo-4-(phenyl-amino)-phenyl | dito | gelbstichig rot |
| 108 | 4-Methyl-2-sulfo-phenyl | dito | dito | dito | gelbstichig rot |

Beispiel 109

Zu einer Mischung aus 194 Teilen Cyanurchlorid in 800 Teilen Wasser und 800 Teilen Eis gibt man langsam eine neutrale Lösung von 319 Teilen 1-Amino-3,6-disulfo-8-naphthol in 500 Teilen Wasser. Man rührt etwa 60 Minuten bei einer Temperatur von 0 bis 5°C und einem pH-Wert von 3,5 nach, trägt sodann 198 Teile 3-Sulfo-1,4-diaminobenzol ein und führt die zweite Kondensationsreaktion bei einer Temperatur von 20 bis 35°C und einem pH-Wert von 5,5 durch.

Zu diesem Ansatz gibt man anschließend eine Diazoniumsalzsuspension, die in üblicher Weise durch Diazotierung einer schwefelsauren Lösung von 289 Teilen 4-(β-Sulfatoethylsulfonyl)-anilin in etwa 1200 Teilen Wasser von 0 bis 5°C hergestellt wird. Die Kupplungsreaktion erfolgt bei einem pH-Wert zwischen 6,0 und 6,5. Danach wird der Ansatz auf 50°C erwärmt, geklärt und sprühgetrocknet.

Man erhält ein rotes, elektrolythaltiges Pulver des Natriumsalzes der Verbindung der Formel

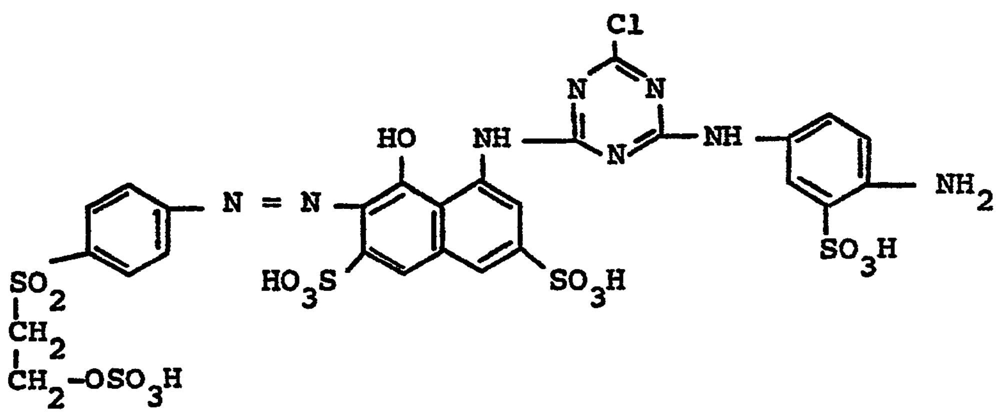

.

Diese erfindungsgemäße Azoverbindung zeigt in wäßriger Lösung im sichtbaren Bereich ein Absorptionsmaximum bei 517 nm; sie besitzt sehr gute faserreaktive Farbstoffeigenschaften und liefert auf Cellulosefasermaterialien gute Färbungen und Drucke mit roter Nuance und guten Gebrauchsechtheiten, von denen insbesondere die gute Naßechtheit und alkalische Schweißechtheit hervorgehoben werden können.

Beispiele 110 bis 126

In den nachfolgenden Tabellenbeispielen sind weitere erfindungsgemäße Verbindungen mit Hilfe ihrer Komponenten entsprechend einer allgemeinen Formel (D)

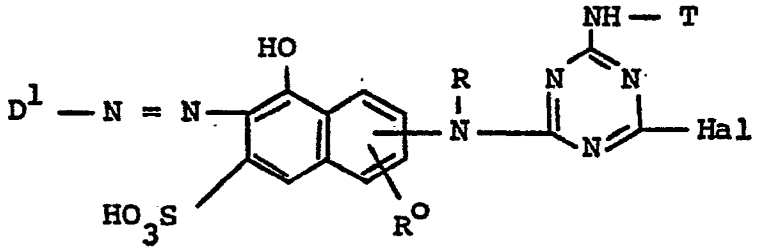

(D)

mit $R^0$ gleich einem Wasserstoffatom oder einer Sulfogruppe und R gleich einem Wasserstoffatom oder einer Methylgruppe beschrieben. Sie lassen sich in erfindungsgemäßer Weise, beispielsweise nach dem Ausführungsbeispiel 109 mittels ihrer aus dem jeweiligen Tabellenbeispiel in Verbindung mit der Formel (D) ersichtlichen Komponenten (der Diazokomponente $D^1$-$NH_2$, Cyanurchlorid oder Cyanurfluorid, bevorzugt Cyanurchlorid, der Methylamino- oder Aminonaphthol-sulfonsäure und der an den Triazinrest ankondensierbaren Aminoverbindung entsprechend der allgemeinen Formel $H_2N$-T ) herstellen. Sie besitzen faserreaktive Farbstoffeigenschaften und liefern insbesondere auf Cellulosefasermaterialien nach den für den faserreaktive Farbstoffen üblichen Applikations- und Fixiermethoden farbstarke, echte Färbungen und Drucke in den in dem jeweiligen Tabellenbeispiel für Färbungen auf Baumwolle angegebenen Farbtönen.

| Bsp. | Verbindung der Formel (B) mit | | | | Farbton |
|---|---|---|---|---|---|
| | $D^1$ gleich ... | Aminonaphthol-sulfonsäure | T gleich ... | Hal gleich ... | |
| 110 | 4-(β-Sulfato-ethyl-sulfonyl)-phenyl | 1-Amino-3,6-di-sulfo-8-napthol | 4-Acetylamino-phenyl | Chlor | rot |
| 111 | dito | dito | 3-Sulfo-4-phenyl-amino)-phenyl | Chlor | rot |
| 112 | 3-(β-Sulfato-ethyl-sulfonyl)-phenyl | dito | dito | Chlor | rot |
| 113 | dito | dito | 3-Sulfo-4-amino-phenyl | Chlor | rot |
| 114 | dito | dito | 4-Acetylamino-phenyl | Chlor | rot |
| 115 | 2-Sulfo-5-(β-sulfatoethyl-sulfonyl)-phenyl | dito | dito | Chlor | rot |
| 116 | 4-(β-Sulfato-ethyl-sulfonyl)-phenyl | 1-Amino-4,6-di-sulfo-8-naphthol | dito | Chlor | gelbstichig rot |
| 117 | dito | dito | 3-Sulfo-4-(phenyl-amino)-phenyl | Chlor | gelbstichig rot |
| 118 | dito | 6-Amino-3-sulfo-1-naphthol | dito | Chlor | gelbstichig rot |
| 119 | dito | 6-N-Methylamino-3-sulfo-1-naphthol | dito | Chlor | gelbstichig rot |
| 120 | dito | 7-Amino-3-sulfo-1-naphthol | dito | Chlor | scharlach |
| 121 | 4-(β-Sulfato-ethyl-sulfonyl)-phenyl | 7-N-Methylamino-3-sulfo-1-naphthol | dito | Chlor | scharlach |
| 122 | 3-(β-Sulfato-ethyl-sulfonyl)-phenyl | 6-Amino-3-sulfo-1-naphthol | dito | Chlor | gelbstichig rot |
| 123 | dito | 7-Amino-3-sulfo-1-naphthol | dito | Chlor | scharlach |
| 124 | 4-(β-Sulfato-ethyl-sulfonyl)-phenyl | 1-Amino-3,6-di-sulfo-8-naphthol | 4-Acetylamino-phenyl | Fluor | rot |
| 125 | dito | dito | 3-Sulfo-4-(phenyl-amino)-phenyl | Fluor | rot |
| 126 | 3-(β-Sulfato-ethyl-sulfonyl)-phenyl | dito | dito | Fluor | rot |

## Patentansprüche

1. Eine wasserlösliche Azoverbindung entsprechend der allgemeinen Formel (1)

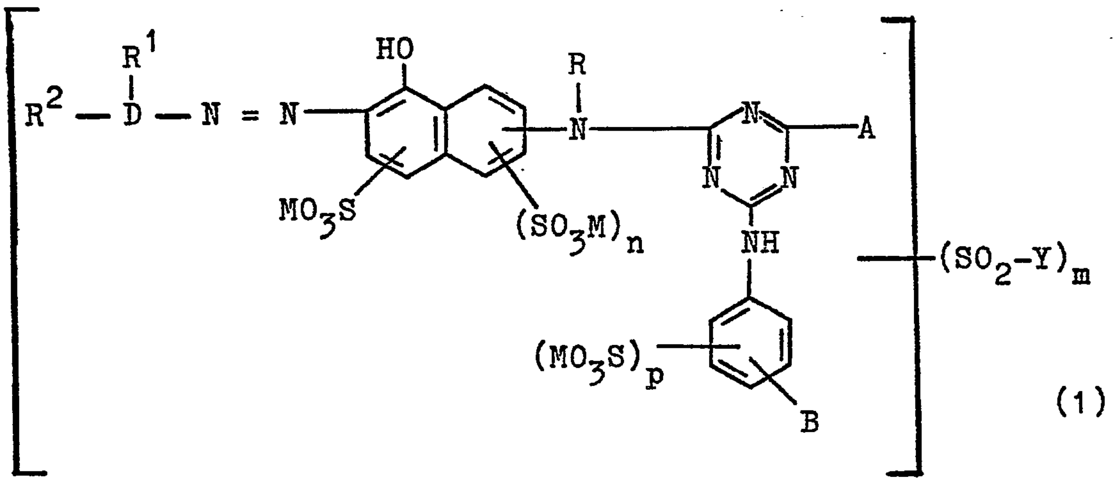

(1)

in welcher bedeuten:
D ist ein Benzolring oder ein Naphthalinring;
$R^1$ ist ein Wasserstoffatom, eine Alkylgruppe von 1 bis 4 C-Atomen, eine Alkoxygruppe von 1 bis 4 C-Atomen, eine Sulfogruppe oder eine Carboxygruppe;
$R^2$ ist ein Wasserstoffatom, eine Alkylgruppe von 1 bis 4 C-Atomen, eine Alkoxygruppe von 1 bis 4 C-Atomen, eine Sulfogruppe, eine Carboxygruppe, ein Arylrest, der substituiert sein kann, eine Hydroxygruppe, eine Nitrogruppe oder ein Halogenatom;
R ist ein Wasserstoffatom oder eine Alkylgruppe von 1 bis 4 C-Atomen, die substituiert sein kann;
A ist eine Hydroxygruppe oder ein Rest der Formel (2a), (2b) oder (2c)

$-O-R^3$ , $-S-R^3$ , 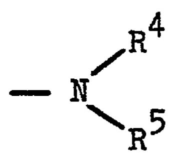

(2a) (2b) (2c)

in welchen
$R^3$ eine Alkylgruppe von 1 bis 4 C-Atomen ist, die substituiert sein kann, oder ein gegebenenfalls substituierter Arylrest ist,
$R^4$ ein Wasserstoffatom, ein gegebenenfalls substituierter aliphatischer Rest oder ein gegebenenfalls substituierter cycloaliphatischer Rest ist und
$R^5$ ein Wasserstoffatom, ein gegebenenfalls substituierter aliphatischer Rest, ein gegebenenfalls substituierter Arylrest, die Cyangruppe, eine gegebenenfalls substituierte Aminogruppe oder eine Gruppe der allgemeinen Formel (2d)

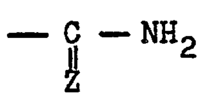 (2d)

bedeutet, in welcher
Z für ein Sauerstoffatom, ein Schwefelatom oder die Imidogruppe NH steht,
oder
$R^4$ und $R^5$ zusammen mit dem Stickstoffatom den Rest eines eine Alkylengruppe von 4 bis 7 C-Atomen oder zwei oder drei Alkylengruppen von 1 bis 5 C-Atomen und eine oder zwei weitere Heterogruppen enthaltenden 5- bis 8-gliedrigen gesättigten heterocyclischen Rings darstellen;
B ist ein Rest der allgemeinen Formel (2e), (2f) oder (2g)

$-O-R^6$ ,  $-S-R^6$ ,  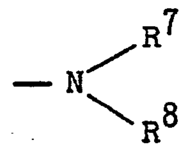

(2e)  (2f)  (2g)

in welchen
$R^6$ ein Wasserstoffatom oder eine Alkylgruppe von 1 bis 4 C-Atomen, die substituiert sein kann, oder ein gegebenenfalls substuierter Arylrest ist,
$R^7$ ein Wasserstoffatom, ein gegebenenfalls substituierter aliphatischer Rest oder ein gegebenenfalls substituierter cycloaliphatischer Rest ist und
$R^8$ ein Wasserstoffatom, ein gegebenenfalls substituierter aliphatischer Rest, ein gegebenenfalls substituierter Arylrest, die Cyangruppe, eine Gruppe der obengenannten und definierten allgemeinen Formel (2d), die Aminogruppe, eine durch Alkyl von 1 bis 4 C-Atomen und/oder gegebenenfalls substituiertes Aryl mono- oder disubstituierte Aminogruppe oder eine Gruppe der allgemeinen Formel (2h)

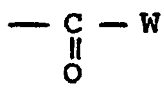  (2h)

bedeutet, in welcher W eine Alkylgruppe von 1 bis 4 C-Atomen ist, die substituiert sein kann, oder eine Alkoxygruppe von 1 bis 4 C-Atomen ist, die substituiert sein kann, oder ein Arylrest ist, der substituiert sein kann,
oder
$R^7$ und $R^8$ zusammen mit dem Stickstoffatom den Rest eines eine Alkylengruppe von 4 bis 7 C-Atomen oder zwei oder drei Alkylengruppen von 1 bis 5 C-Atomen und eine oder zwei weitere Heterogruppen enthaltenden 5- bis 8-gliedrigen gesättigten heterocyclischen Rings darstellen;
M ist ein Wasserstoffatom oder ein Alkalimetall oder das Äquivalent eines Erdalkalimetalls;
m steht für die Zahl 1 oder 2;
n steht für die Zahl Null oder 1;
p steht für die Zahl Null, 1 oder 2;
Y ist eine β-Thiosulfatoethyl-Gruppe, eine β-Phosphatoethyl-Gruppe, die β-Chlorethyl-Gruppe, die Vinylgruppe oder eine β-Sulfatoethyl-Gruppe;
die einmal oder zweimal in der Verbindung der Formel (1) befindliche Gruppe $-SO_2-Y$ ist an den Formelrest A oder D oder an beide in beliebigen Positionen gebunden.

2. Eine Verbindung nach Anspruch 1, in welcher B einen Rest der Formel (2e), (2f) oder (2g)

$-O-R^6$ ,  $-S-R^6$ ,  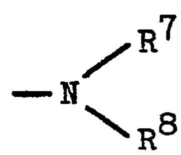

(2e)  (2f)  (2g)

bedeutet, in welchen
$R^6$ ein Wasserstoffatom oder eine Alkylgruppe von 1 bis 4 C-Atomen ist, die durch einen oder zwei Substituenten aus der Gruppe Alkoxy von 1 bis 4 C-Atomen, Sulfo, Carboxy, Hydroxy, Sulfato, Phosphato, Phenyl, Naphthyl, durch 1 oder 2 Substituenten aus der Gruppe Alkyl von 1 bis 4 C-Atomen, Alkoxy von 1 bis 4 C-Atomen, Hydroxy, Nitro, Carboxy, Sulfo und Chlor substituiertes Phenyl und durch eine, zwei oder drei Sulfogruppen substituiertes Naphthyl substituiert sein kann,
oder einen Phenylrest oder Naphthylrest bedeutet
oder ein durch 1 oder 2 Substituenten aus der Gruppe Alkyl von 1 bis 4 C-Atomen, Alkoxy von 1 bis 4 C-Atomen, Hydroxy, Nitro, Carboxy, Sulfo und Chlor substituierter Phenylrest
oder ein durch eine, zwei oder drei Sulfogruppen substituierter Naphthylrest ist,
$R^7$ ein Wasserstoffatom oder eine Alkylgruppe von 1 bis 4 C-Atomen ist, die durch einen oder zwei Substituenten aus der Gruppe Alkoxy von 1 bis 4 C-Atomen, Sulfo, Carboxy, Hydroxy, Sulfato, Phosphato, Phenyl, Naphthyl, durch 1 oder 2 Substituenten aus der Gruppe Alkyl von 1 bis 4 C-Atomen, Hydroxy, Nitro, Carboxy, Sulfo und Chlor substituiertes Phenyl und durch eine, zwei oder drei Sulfogruppen substituiertes Naphthyl substituiert sein kann,
oder ein Alkenylrest von 2 bis 4 C-Atomen

oder ein 5- bis 8-gliedriger Cycloalkylrest, der durch 1 bis 3 Methylgruppen substituiert sein kann, ist, und

$R^8$ ein Wasserstoffatom oder eine Alkylgruppe von 1 bis 4 C-Atomen ist, die durch eine oder zwei Substituenten aus der Gruppe Alkoxy von 1 bis 4 C-Atomen, Sulfo, Carboxy, Hydroxy, Sulfato, Phosphato, Phenyl, Naphthyl, durch 1 oder 2 Substituenten aus der Gruppe Alkyl von 1 bis 4 C-Atomen, Alkoxy von 1 bis 4 C-Atomen, Hydroxy, Nitro, Carboxy, Sulfo und Chlor substituiertes Phenyl und durch eine, zwei oder drei Sulfogruppen substituiertes Naphthyl substituiert sein kann,
oder eine Alkenylgruppe von 2 bis 4 C-Atomen bedeutet
oder ein Phenylrest oder Naphthylrest
oder ein durch 1 oder 2 Substituenten aus der Gruppe Alkyl von 1 bis 4 C-Atomen, Alkoxy von 1 bis 4 C-Atomen, Hydroxy, Nitro, Carboxy, Sulfo und Chlor substituierter Phenylrest
oder ein durch eine, zwei oder drei Sulfogruppen substituierter Naphthylrest ist,
oder die Cyangruppe oder eine Gruppe der allgemeinen Formel (2d)

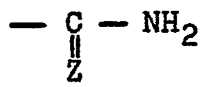
(2d)

in welcher Z für ein Sauerstoffatom, ein Schwefelatom oder die Imidogruppe NH steht,
oder die Aminogruppe oder eine Aminogruppe ist, die durch Alkyl von 1 bis 4 C-Atomen und/oder Phenyl oder Naphthyl oder durch 1 oder 2 Substituenten aus der Gruppe Alkyl von 1 bis 4 C-Atomen, Alkoxy von 1 bis 4 C-Atomen, Hydroxy, Nitro, Carboxy, Sulfo und Chlor substituiertes Phenyl oder durch eine, zwei oder drei Sulfogruppen substituiertes Naphthyl mono- oder disubstituiert ist,
oder eine Gruppe der allgemeinen Formel (2h)

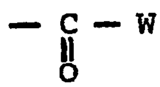
(2h)

bedeutet, in welcher W eine Alkylgruppe von 1 bis 4 C-Atomen ist, die durch einen oder zwei Substituenten aus der Gruppe Alkoxy von 1 bis 4 C-Atomen, Sulfo, Carboxy, Hydroxy, Sulfato, Phosphato, Phenyl, Naphthyl, durch 1 oder 2 Substituenten aus der Gruppe Alkyl von 1 bis 4 C-Atomen, Alkoxy von 1 bis 4 C-Atomen, Hydroxy, Nitro, Carboxy, Sulfo und Chlor substituiertes Phenyl und durch eine, zwei oder drei Sulfogruppen substituiertes Naphthyl substituiert sein kann, oder eine Alkoxygruppe von 1 bis 4 C-Atomen ist, die durch eine Hydroxygruppe oder eine Alkoxygruppe von 1 bis 4 C-Atomen oder eine Alkoxyalkoxygruppe von jeweils 1 bis 4 C-Atomen in den Alkylresten substituiert sein kann,
oder
$R^7$ und $R^8$ stellen zusammen mit dem Stickstoffatom den Rest eines eine Alkylengruppe von 4 bis 7 C-Atomen oder zwei oder drei Alkylengruppen von 1 bis 5 C-Atomen und eine oder zwei Heterogruppen aus der Gruppe Stickstoff, Sauerstoff und Schwefel enthaltenden 5- bis 8-gliedrigen gesättigten heterocyclischen Rings dar.

3. Eine Verbindung nach Anspruch 1 entsprechend der allgemeinen Formel (1d)

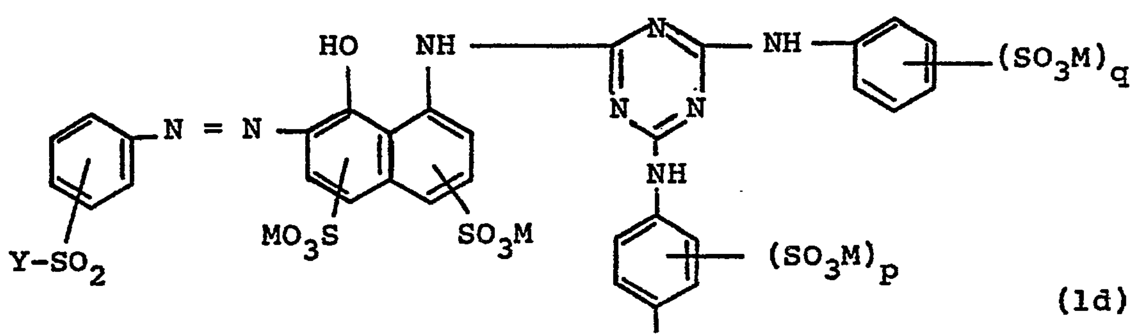
(1d)

in welcher M, Y und p die in Anspruch 1 genannten Bedeutungen haben, B einen Rest entsprechend der in Anspruch 1 oder 2 genannten und definierten allgemeinen Formel (2f) oder (2g) bedeutet und q für die Zahl 1 oder 2 steht.

4. Eine Verbindung nach Anspruch 1 entsprechend der allgemeinen Formel (1g)

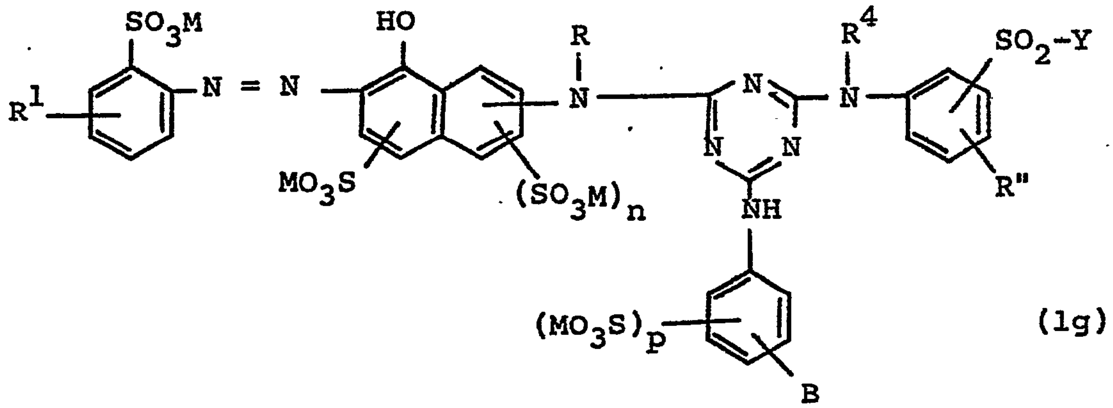

(1g)

in welcher B, M, $R^1$, R, $R^4$, Y, p und n die in Anspruch 1 genannten Bedeutungen haben und R" ein Wasserstoffatom, eine Alkylgruppe von 1 bis 4 C-Atomen, eine Alkoxygruppe von 1 bis 4 C-Atomen, eine Sulfogruppe, eine Carboxygruppe, einen Arylrest, der substituiert sein kann, eine Hydroxygruppe, eine Nitrogruppe oder ein Halogenatom bedeutet.

5. Eine Verbindung nach Anspruch 1 entsprechend der allgemeinen Formel (1h)

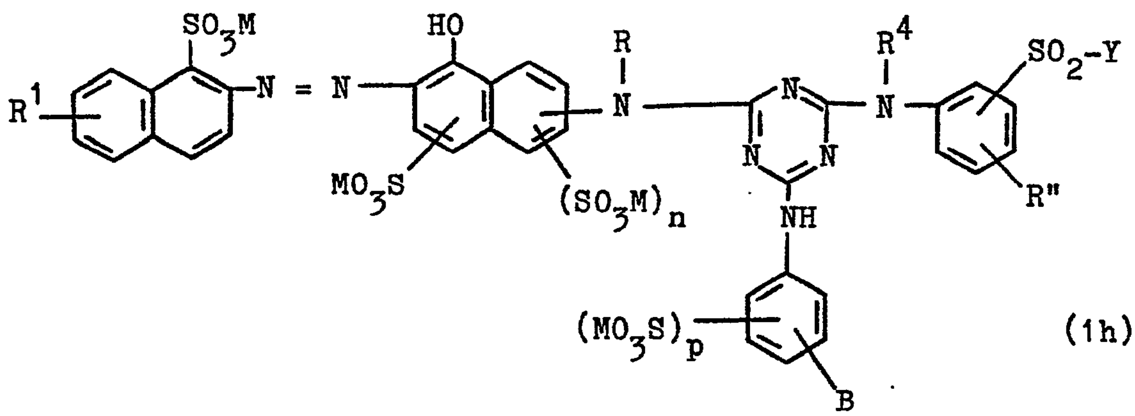

(1h)

in welcher B, M, $R^1$, R, $R^4$, Y, p und n die in Anspruch 1 genannten Bedeutungen haben und R" ein Wasserstoffatom, eine Alkylgruppe von 1 bis 4 C-Atomen, eine Alkoxygruppe von 1 bis 4 C-Atomen, eine Sulfogruppe, eine Carboxygruppe, einen Arylrest, der substituiert sein kann, eine Hydroxygruppe, eine Nitrogruppe oder ein Halogenatom bedeutet.

6. Eine Verbindung entsprechend der allgemeinen Formel (1A)

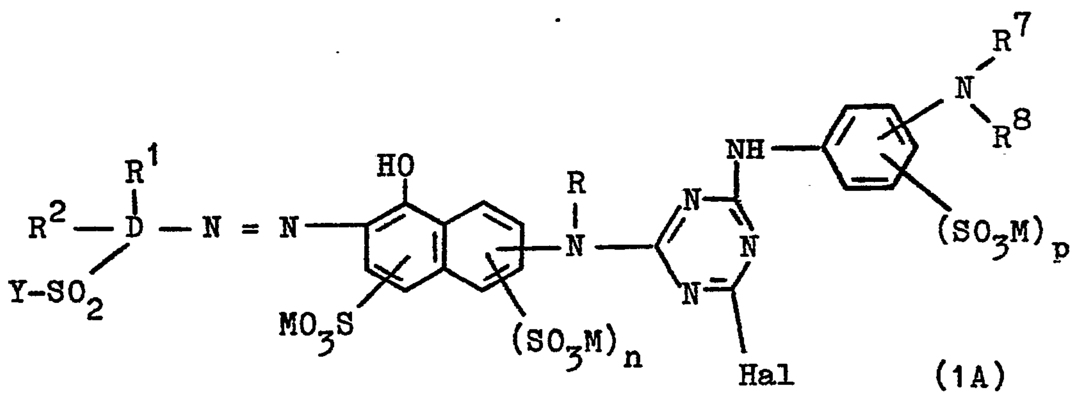

(1A)

in welcher D, M, $R^1$, $R^2$, R Y, n, p, $R^7$ und $R^8$ die in Anspruch 1 oder 2 genannten Bedeutung haben und Hal ein Chlor- oder Fluoratom bedeutet.

7. Verbindung nach Anspruch 6, dadurch gekennzeichnet, daß Hal ein Chloratom ist.

8. Verfahren zur Herstellung einer in Anspruch 1 genannten und definierten Verbindung der allgemeinen Formel (1), dadurch gekennzeichnet, daß man eine Azoverbindung der allgemeinen Formel (3)

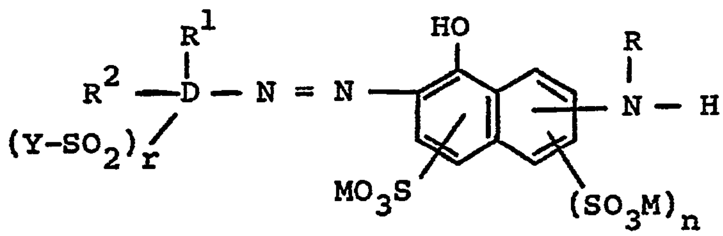

(3),

ein aromatisches Amin der allgemeinen Formel (4) und eine Verbindung der allgemeinen Formel (5)

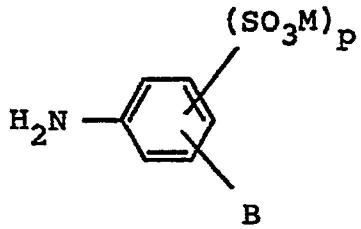

$$H-A-(SO_2-Y)_s$$

(4) (5)

in welchen D, M, R¹, R², R, n, p, A, B und Y die in Anspruch 1 genannten Bedeutungen haben und r und s jedes für die Zahl Null, 1 oder 2 steht, mit 2,4,6-Trichlor-s-triazin oder 2,4,6-Trifluo-s-triazin in beliebiger Reihenfolge oder gegebenenfalls gleichzeitig umsetzt, wobei man die Ausgangsverbindungen der allgemeinen Formel (3) und (5) so auswählt, daß die Summe von (r + s) die Bedeutung von m hat, oder daß man eine Triazinylamino-naphthol-sulfonsäure-Verbindung der allgemeinen Formel (8)

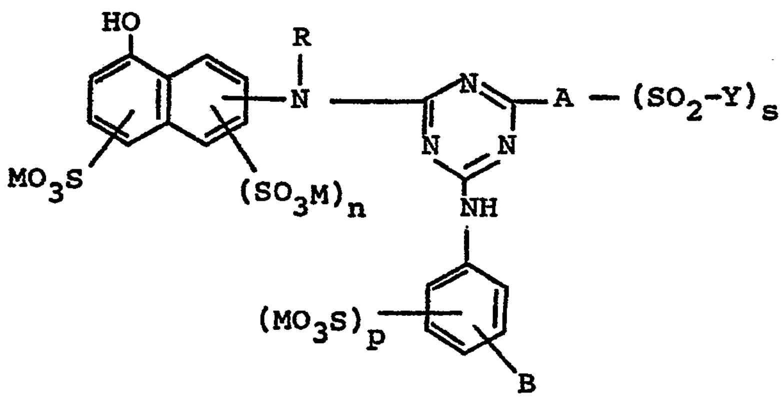

(8)

in welcher A, B, R, M, Y, n, p und s die obengenannten Bedeutungen haben, mit der Diazoniumverbindung eines aromatischen Amins der allgemeinen Formel (9)

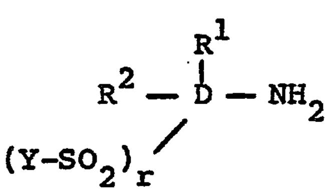

(9)

in welcher D, R¹, R², Y und r die obengenannten Bedeutungen haben, kuppelt, wobei man die Ausgangsverbindungen so auswählt, daß die Summe (r + s) die Bedeutung von m besitzt.

9. Verfahren zur Herstellung einer in Anspruch 6 genannten und definierten Verbindung der allgemeinen Formel (1A), dadurch gekennzeichnet, daß man eine Monohalogentriazinylamino-naphtholsulfonsäure-Verbindung der allgemeinen Formel (11A)

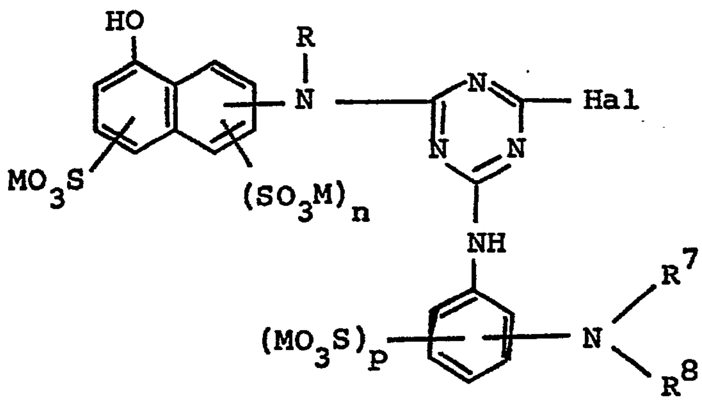

(11A)

in welcher Hal, M, R, p, n, $R^7$ und $R^8$ die in Anspruch 6 genannten Bedeutungen haben, mit der Diazoniumverbindung eines aromatischen Amins der allgemeinen Formel (9A)

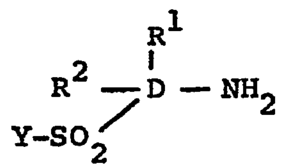

(9A)

in welcher D, $R^1$, $R^2$ und Y die in Anspruch 6 genannten Bedeutungen haben, kuppelt, oder daß man eine Dihalogentriazinylamino-naphtholsulfonsäure-Azoverbindung der allgemeinen Formel (13A)

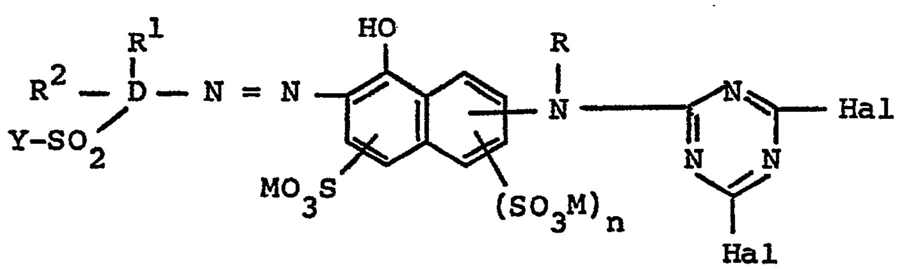

(13A)

in welcher D, M, $R^1$, $R^2$, R, Y, n und Hal die in Anspruch 6 genannten Bedeutungen haben, mit einer aromatischen Verbindung der allgemeinen Formel (4A)

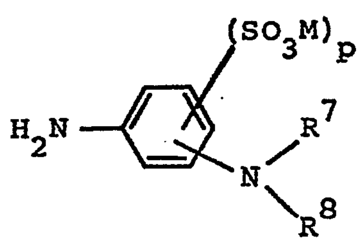

(4A)

in welcher M, p, $R^7$ und $R^8$ die in Anspruch 6 genannten Bedeutungen haben, umsetzt.

10. Verfahren zur Herstellung einer Azoverbindung der allgemeinen Formel (1) oder (1A), in welchen Y für die β-Sulfatoethylgruppe steht, dadurch gekennzeichnet, daß man eine Azoverbindung, die der allgemeinen Formel (1) bzw. (1A) entspricht, in welchen jedoch eines oder beide der Formelreste Y für eine β-Hydroxyethyl-Gruppe steht, mit einem Sulfatierungsmittel verestert.

11. Verfahren zur Herstellung von Azoverbindungen der allgemeinen Formel (1), in welchen Y für die β-Thiosulfatoethyl-Gruppe steht, dadurch gekennzeichnet, daß man eine Azoverbindung entsprechend der allgemeinen Formel (1), in welcher eine oder beide Gruppen der Formel $-SO_2-Y$ eine β-Sulfatoethylsulfonyl-Gruppe bedeuten, im alkalisch-wäßrigen Medium zunächst zur Vinylsulfonyl-Verbindung und diese sodann bei einem pH-Bereich zwischen 3 und 7 mit einem Alkalithiosulfat umsetzt.

12. Verwendung einer Azoverbindung der in Anspruch 1 genannten und definierten allgemeinen Formel (1) als Farbstoff.

13. Verwendung einer Azoverbindung der in Anspruch 6 genannten und definierten allgemeinen Formel (1A) als Farbstoff.

14. Verwendung nach Anspruch 12 oder 13 zum Färben von hydroxy- und/oder carbonamidgruppenhaltigen Materialien, insbesondere Fasermaterialien.

15. Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mittels eines säurebindenden Mittels fixiert, dadurch gekennzeichnet, daß man als Farbstoff eine Verbindung der in Anspruch 1 oder 6 genannten und definierten allgemeinen Formel (1) bzw. (1A) einsetzt.

## Claims

1. A water-soluble azo compound conforming to the general formula (1) in which the meanings are:

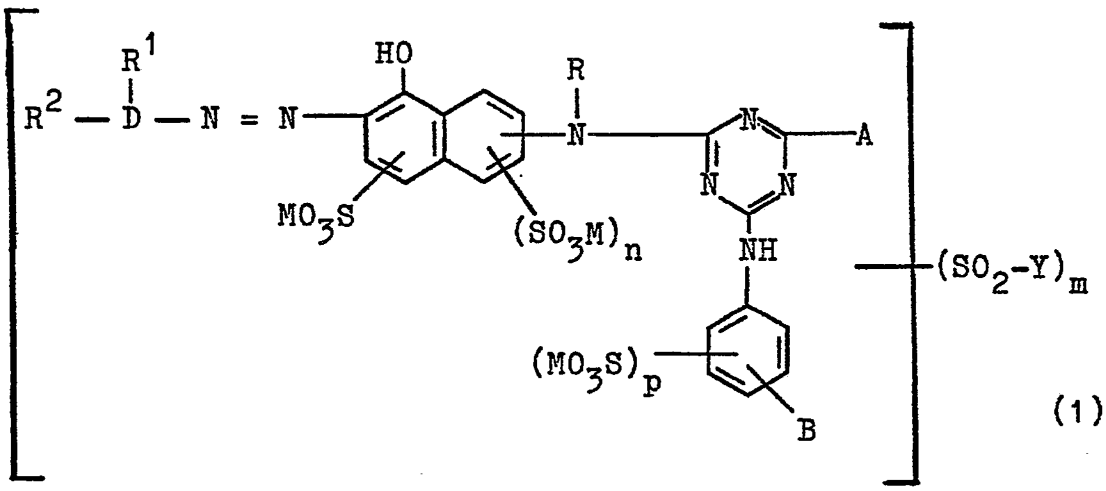

(1)

D is a benzene ring or a naphthalene ring;
$R^1$ is a hydrogen atom, an alkyl group of 1 to 4 carbon atoms, an alkoxy group of 1 to 4 carbon atoms, a sulfo group or a carboxyl group;
$R^2$ is a hydrogen atom, an alkyl group of 1 to 4 carbon atoms, an alkoxy group of 1 to 4 carbon atoms, a sulfo group, a carboxyl group, an aryl radical, which can be substituted, a hydroxyl group, a nitro group or a halogen atom;
R is a hydrogen atom or an alkyl group of 1 to 4 carbon atoms, which can be substituted;
A is a hydroxyl group or a radical of the formula (2a), (2b) or (2c)

$-O-R^3$ , $-S-R^3$ , 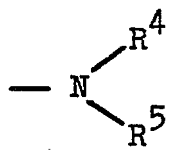

(2a) (2b) (2c)

in which
$R^3$ is an alkyl group of 1 to 4 carbon atoms, which can be substituted, or a substituted or unsubstituted aryl radical,
$R^4$ is a hydrogen atom, a substituted or unsubstituted aliphatic radical or a substituted or unsubstituted cycloaliphatic radical and
$R^5$ denotes a hydrogen atom, a substituted or unsubstituted aliphatic radical, a substituted or unsubstituted aryl radical, the cyano group, a substituted or unsubstituted amino group or a group of the general formula (2d)

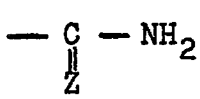 (2d)

in which
Z stands for an oxygen atom, a sulfur atom or the imido group NH, or

$R^4$ and $R^5$ together with the nitrogen atom represent the radical of a 5- to 8-membered saturated heterocyclic ring which contains an alkylene group of 4 to 7 carbon atoms or 2 or 3 alkylene groups of 1 to 5 carbon atoms and 1 or 2 further hetero groups;
B is a radical of the general formula (2e), (2f) or (2g)

$-O-R^6$ , $-S-R^6$ , 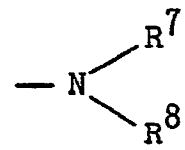

(2e) (2f) (2g)

in which
$R^6$ is a hydrogen atom or an alkyl group of 1 to 4 carbon atoms, which can be substituted, or a substituted or unsubstituted aryl radical,
$R^7$ is a hydrogen atom, a substituted or unsubstituted aliphatic radical or a substituted or unsubstituted cycloaliphatic radical, and
$R^8$ is a hydrogen atom, a substituted or unsubstituted aliphatic radical, a substituted or unsubstituted aryl radical, the cyano group, a group of the abovementioned and defined general formula (2d), the amino group, an amino group which is monosubstituted or disubstituted by alkyl of 1 to 4 carbon atoms and/or substituted or unsubstituted aryl, or is a group of the general formula (2h)

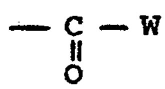 (2h)

in which
W is an alkyl group of 1 to 4 carbon atoms, which can be substituted, or an alkoxy group of 1 to 4 carbon atoms, which can be substituted, or an aryl radical, which can be substituted, or
$R^7$ and $R^8$ together with the nitrogen atom represent the radical of a 5- to 8-membered saturated heterocyclic ring which contains an alkylene group of 4 to 7 carbon atoms or 2 or 3 alkylene groups of 1 to 5 carbon atoms and 1 or 2 further hetero groups;
M is a hydrogen atom or an alkali metal or one equivalent of an alkaline earth metal;
m stands for the number 1 or 2;
n stands for the number 0 or 1;
p stands for the number 0, 1 or 2;
Y is a β-thiosulfatoethyl group, a β-phosphatoethyl group, the β-chloroethyl group, the vinyl group or a β-sulfatoethyl group;
and the $-SO_2-Y$ group which is present once or twice in the compound of the formula (1) is bonded to the formula radical A or D or to both in any desired position.

2. A compound as claimed in claim 1, in which B denotes a radical of the formula (2e), (2f) or (2g)

$-O-R^6$ , $-S-R^6$ , 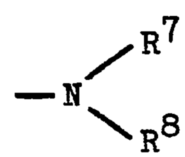

(2e) (2f) (2g)

in which
$R^6$ is a hydrogen atom or an alkyl group of 1 to 4 carbon atoms, which can be substituted by 1 or 2 substituents from the group consisting of alkoxy of 1 to 4 carbon atoms, sulfo, carboxyl, hydroxyl, sulfato, phosphato, phenyl, naphthyl, phenyl which is substituted by 1 or 2 substituents from the group consisting of alkyl of 1 to 4 carbon atoms, alkoxy of 1 to 4 carbon atoms, hydroxyl, nitro, carboxyl, sulfo and chlorine, and naphthyl which is substituted by 1, 2 or 3 sulfo groups,
or denotes a phenyl radical or naphthyl radical or is a phenyl radical which is substituted by 1 or 2 substituents from the group consisting of alkyl of 1 to 4 carbon atoms, alkoxy of 1 to 4 carbon atoms, hydroxyl, nitro, carboxyl, sulfo and chlorine
or a naphthyl radical which is substituted by 1, 2 or 3 sulfo groups,
$R^7$ is a hydrogen atom or an alkyl group of 1 to 4 carbon atoms, which can be substituted by 1 or 2 substituents from the group consisting of alkoxy of 1 to 4 carbon atoms, sulfo, carboxyl, hydroxyl, sulfato, phosphato, phenyl, naphthyl, phenyl which is substituted by 1 or 2 substituents from the group consisting of alkyl of 1 to 4 carbon atoms, hydroxyl, nitro, carboxyl, sulfo and chlorine, and naphthyl which is substituted by 1, 2 or 3 sulfo groups, or is an alkenyl radical of 2 to 4 carbon atoms or a 5- to 8-membered cycloalkyl radical, which can be substituted by 1 to 3 methyl groups, and

$R^8$ is a hydrogen atom or an alkyl group of 1 to 4 carbon atoms, which can be substituted by 1 or 2 substituents from the group consisting of alkoxy of 1 to 4 carbon atoms, sulfo, carboxyl, hydroxyl, sulfato, phosphato, phenyl, naphthyl, phenyl which is substituted by 1 or 2 substituents from the group consisting of alkyl of 1 to 4 carbon atoms, alkoxy of 1 to 4 carbon atoms, hydroxyl, nitro, carboxyl, sulfo and chlorine, and naphthyl which is substituted by 1, 2 or 3 sulfo groups,
or denotes an alkenyl group of 2 to 4 carbon atoms,
or is a phenyl radical or naphthyl radical or a phenyl radical which is substituted by 1 or 2 substituents from the group consisting of alkyl of 1 to 4 carbon atoms, alkoxy of 1 to 4 carbon atoms, hydroxyl, nitro, carboxyl, sulfo and chlorine
or a naphthyl radical which is substituted by 1, 2 or 3 sulfo groups,
or is the cyano group or a group of the general formula (2d)

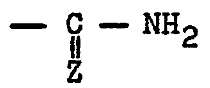

(2d)

in which
Z stands for an oxygen atom, a sulfur atom or the imido group NH,
or is the amino group or an amino group which is monosubstituted or disubstituted by alkyl of 1 to 4 carbon atoms and/or phenyl or naphthyl or phenyl which is substituted by 1 or 2 substituents from the group consisting of alkyl of 1 to 4 carbon atoms, alkoxy of 1 to 4 carbon atoms, hydroxyl, nitro, carboxyl, sulfo and chlorine or naphthyl which is substituted by 1, 2 or 3 sulfo groups,
or denotes a group of the general formula (2h)

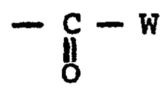

(2h)

in which W is an alkyl group of 1 to 4 carbon atoms, which can be substituted by 1 or 2 substituents from the group consisting of alkoxy of 1 to 4 carbon atoms, sulfo, carboxyl, hydroxyl, sulfato, phosphato, phenyl, naphthyl, phenyl which is substituted by 1 or 2 substituents from the group consisting of alkyl of 1 to 4 carbon atoms, alkoxy of 1 to 4 carbon atoms, hydroxyl, nitro, carboxyl, sulfo and chlorine, and naphthyl which is substituted by 1, 2 or 3 sulfo groups,
or is an alkoxy group of 1 to 4 carbon atoms, which can be substituted by a hydroxyl group or an alkoxy group of 1 to 4 carbon atoms or an alkoxyalkoxy group of 1 to 4 carbon atoms in each of the alkyl radicals, or
$R^7$ and $R^8$ together with the nitrogen atom represent the radical of a 5- to 8-membered saturated heterocyclic ring which contains an alkylene group of 4 to 7 carbon atoms or 2 or 3 alkylene groups of 1 to 5 carbon atoms and 1 or 2 hetero groups from the group consisting of nitrogen, oxygen and sulfur.

3. A compound as claimed in claim 1, conforming to the general formula (1d)

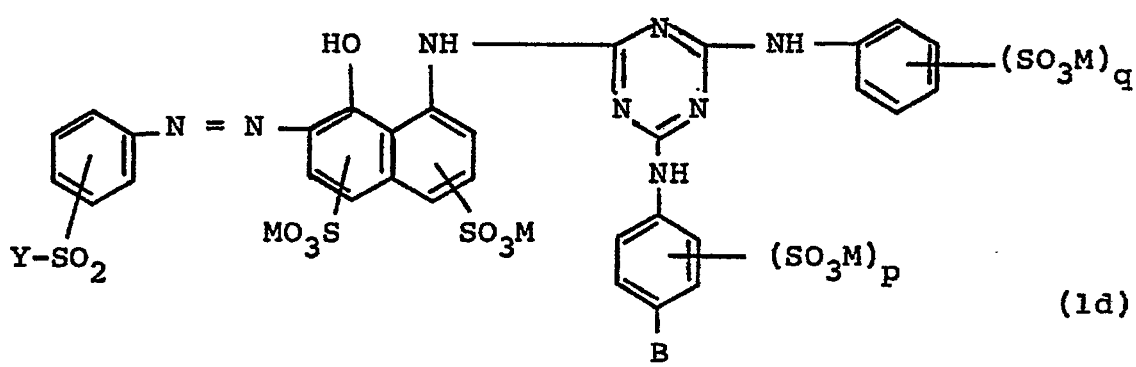

(1d)

in which M, Y and p have the meanings mentioned in claim 1, B denotes a radical conforming to the general formula (2f) or (2g) mentioned and defined in claim 1 or 2, and q stands for the number 1 or 2.

4. A compound as claimed in claim 1, conforming to the general formula (1g)

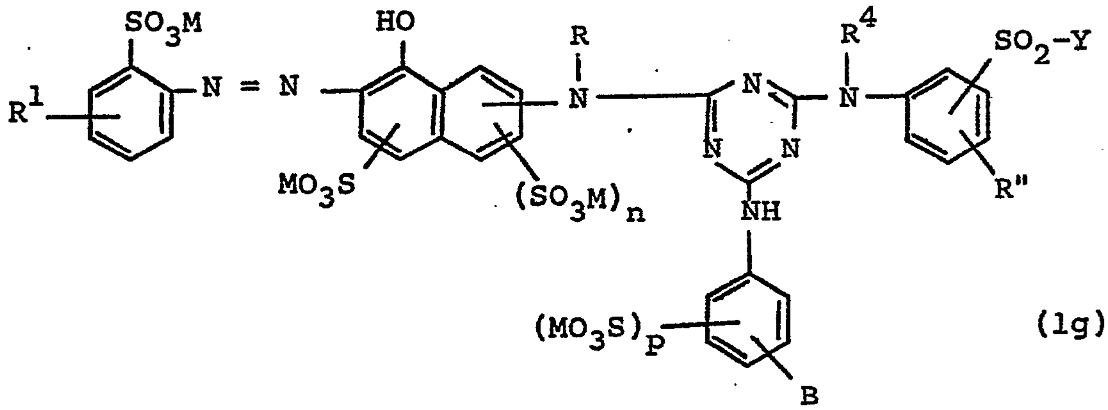

(1g)

in which B, M, $R^1$, R, $R^4$, Y, p and n have the meanings mentioned in claim 1 and R″ denotes a hydrogen atom, an alkyl group of 1 to 4 carbon atoms, an alkoxy group of 1 to 4 carbon atoms, a sulfo group, a carboxyl group, an aryl radical, which can be substituted, a hydroxyl group, a nitro group or a halogen atom.

5. A compound as claimed in claim 1, conforming to the general formula (1h)

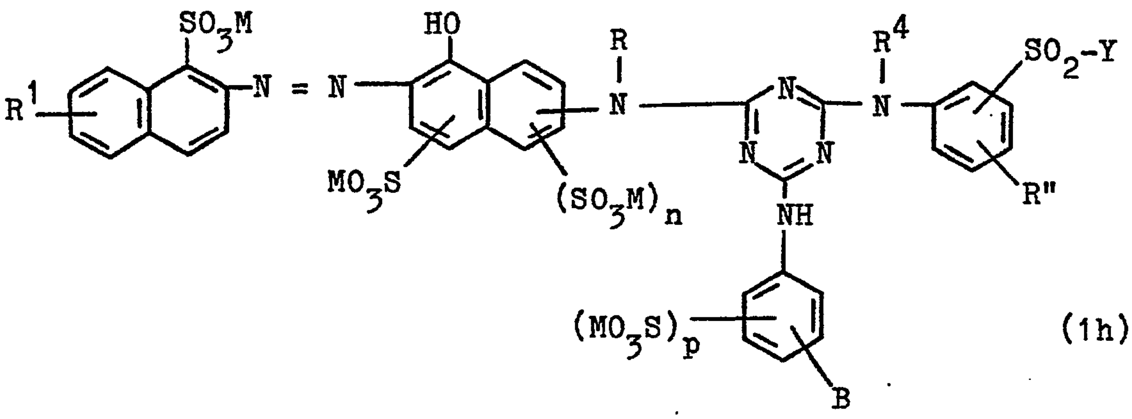

(1h)

in which B, M, $R^1$, R, $R^4$, Y, p and n have the meanings mentioned in claim 1 and R″ denotes a hydrogen atom, an alkyl group of 1 to 4 carbon atoms, an alkoxy group of 1 to 4 carbon atoms, a sulfo group, a carboxyl group, an aryl radical, which can be substituted, a hydroxyl group, a nitro group or a halogen atom.

6. A compound conforming to the general formula (1A)

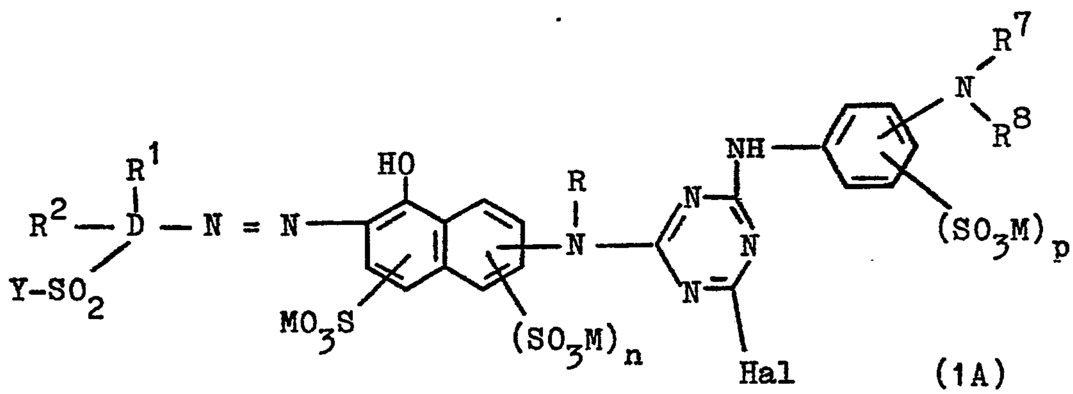

(1A)

in which D, M, $R^1$, $R^2$, R, Y, n, p, $R^7$ and $R^8$ have the meanings mentioned in claim 1 or 2, and Hal denotes a chlorine or fluorine atom.

7. A compound as claimed in claim 6, wherein Hal is a chlorine atom.

8. A process for preparing a compound of the general formula (1) mentioned and defined in claim 1, which comprises reacting an azo compound of the general formula (3)

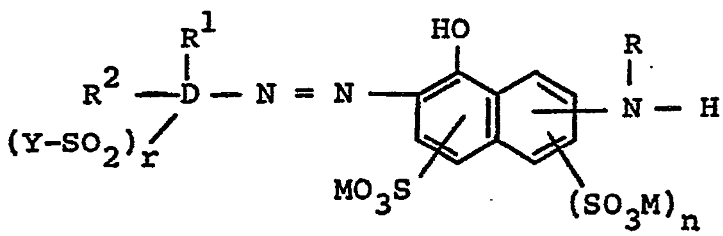

(3)

an aromatic amine of the general formula (4) and a compound of the general formula (5)

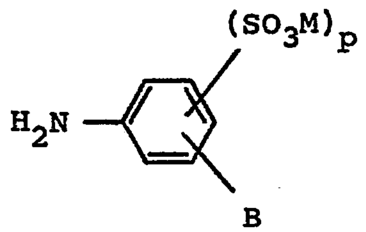

$$H-A-(SO_2-Y)_s$$

(4) (5)

in which D, M, $R^1$, $R^2$, R, n, p, A, B and Y have the meanings mentioned in claim 1 and r and s each stands for the number 0, 1 or 2, with 2,4,6-trichloro-s-triazine or 2,4,6-trifluoro-s-triazine in any desired order or, if desired, simultaneously, the starting compounds of the general formula (3) and (5) being so chosen that the sum of (r + s) has the meaning of m, or coupling a triazinylaminonaphtholsulfonic acid compound of the general formula (8)

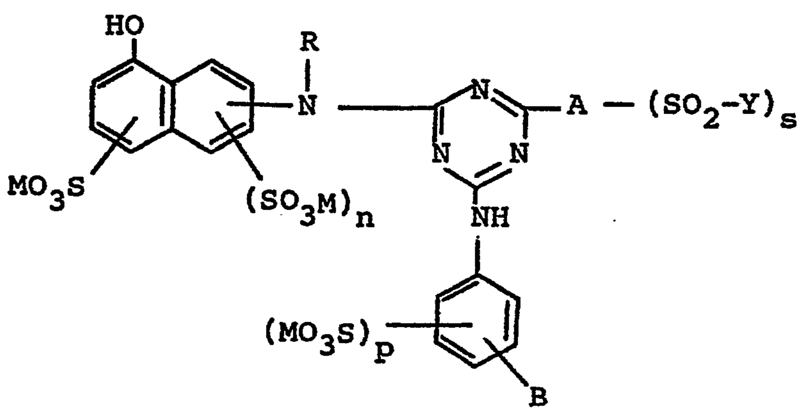

(8)

in which A, B, R, M, Y, n, p and s have the abovementioned meanings, with the diazonium compound of an aromatic amine of the general formula (9)

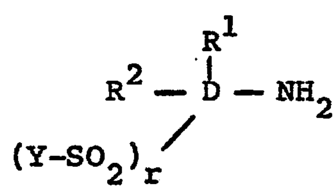

(9)

in which D, $R^1$, $R^2$, Y and r have the abovementioned meanings, the starting compounds being so chosen that the sum (r + s) has the meaning of m.

9. A process for preparing a compound of the formula (1A) mentioned and defined in claim 6, which comprises coupling a monohalogenotriazinylaminonaphtholsulfonic acid compound of the general formula (11A)

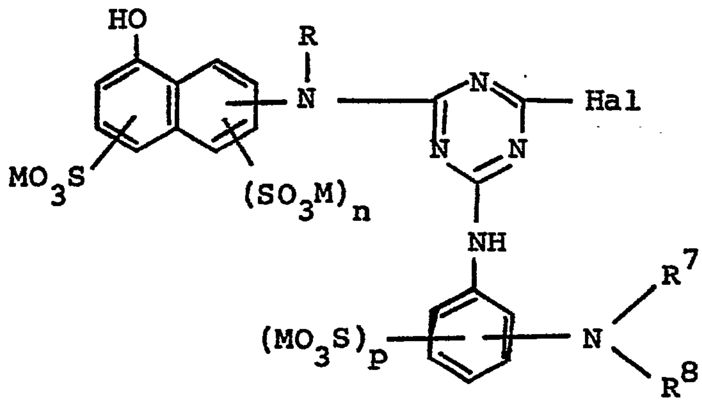

(11A)

in which Hal, M, R, p, n, $R^7$ and $R^8$ have the meanings mentioned in claim 6, with the diazonium compound of an aromatic amine of the general formula (9A)

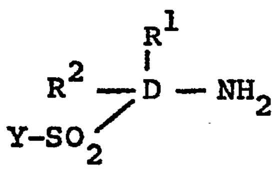

(9A)

in which D, $R^1$, $R^2$ and Y have the meanings mentioned in claim 6, or reacting a dihalogenotriazinylamino-naphtholsulfonic acid-azo compound of the general formula (13A)

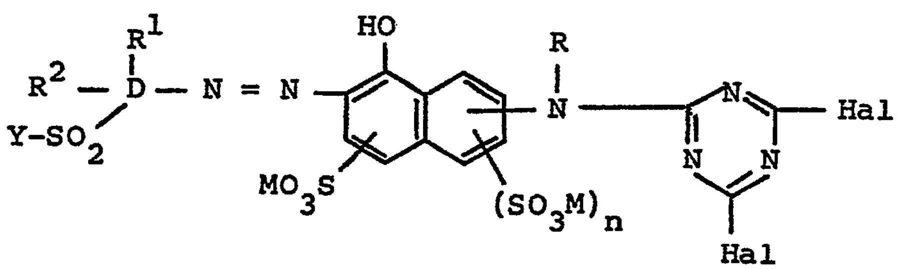

(13A)

in which D, M, $R^1$, $R^2$, R, Y, n and Hal have the meanings mentioned in claim 6, with an aromatic compound of the general formula (4A)

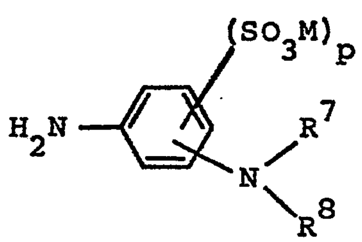

(4A)

in which M, p, $R^7$ and $R^8$ have the meanings mentioned in claim 6.

10. A process for preparing an azo compound of the general formula (1) or (1A) in which Y stands for the β-sulfatoethyl group, wherein an azo compound which conforms to the general formula (1) or (1A), but in which one or both of the formula radicals Y stands for a β-hydroxyethyl group, is esterified with a sulfating agent.

11. A process for preparing azo compounds of the formula (1) in which Y stands for the β-thiosulfatoethyl group, which comprises converting an azo compound conforming to the general formula (1) in which one or both groups of the formula $-SO_2-Y$ denote a β-sulfatoethyl-sulfonyl group in an alkaline-aqueous medium first to the vinylsulfonyl compound and then reacting the latter at a pH range between 3 and 7 with an alkali metal thiosulfate.

12. Use of an azo compound of the general formula (1) mentioned and defined in claim 1, as a dye.

13. Use of an azo compound of the general formula (1A) mentioned and defined in claim 6, as a dye.

14. Use as claimed in claim 12 or 13, for dyeing hydroxyl- and/or carboxamido-containing materials, in particular fiber materials.

15. A process for dyeing (including printing) hydroxyl- and/or carboxamido-containing material, in particular fiber material, wherein a dye is applied to a incorporated into the material and fixed by means of heat and/or by means of an acid-binding agent, which comprises using as the dye a compound of the general formula (1) or (1A) mentioned and defined in claim 1 and 6.

## Revendications

1. Composé azoïque hydrosoluble répondant à la formule générale (1):

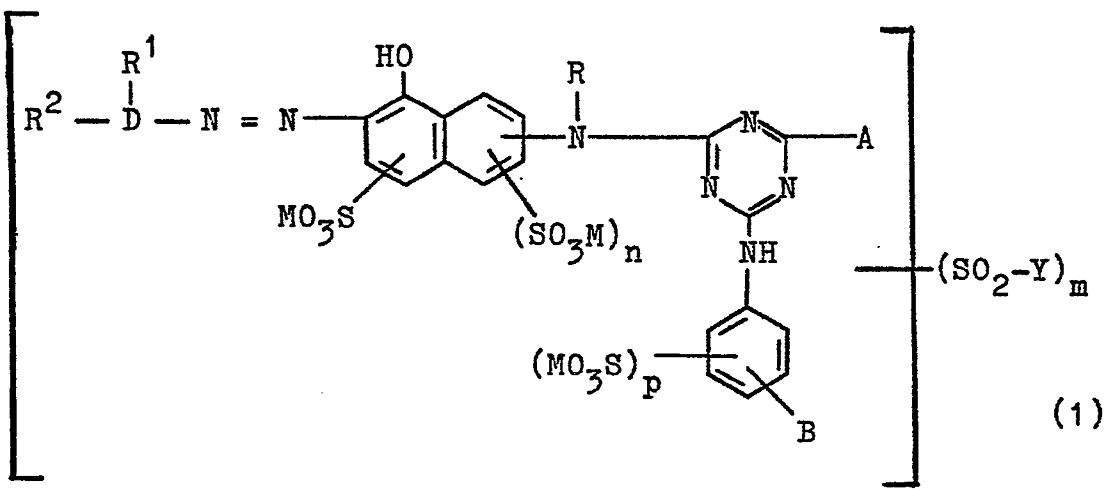

(1)

dans laquelle:
D représente un noyau benzénique ou un noyau naphtalénique;
$R^1$ représente un atome d'hydrogène, un groupe alkyle ayant 1 à 4 atomes de carbone, un groupe alcoxy ayant 1 à 4 atomes de carbone, un groupe sulfo ou un groupe carboxy;
$R^2$ représente un atome d'hydrogène, un groupe alkyle ayant 1 à 4 atomes de carbone, un groupe alcoxy ayant 1 à 4 atomes de carbone, un groupe sulfo, un groupe carboxy, un reste aryle (qui peut être substitué), un groupe hydroxy, un groupe nitro ou un atome d'halogène;
R représente un atome d'hydrogène ou un groupe alkyle ayant 1 à 4 atomes de carbone, qui peut être substitué;
A représente un groupe hydroxyle ou un reste répondant aux formules (2a), (2b) ou (2c):

$-O-R^3$ , $-S-R^3$ , 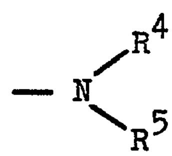

(2a) (2b) (2c)

dans lesquelles:
$R^3$ représente un groupe alkyle ayant 1 à 4 atomes de carbone (qui peut être substitué) ou un reste aryle éventuellement substitué,
$R^4$ représente un atome d'hydrogène, un reste aliphatique éventuellement substitué ou un reste cycloaliphatique éventuellement substitué, et
$R^5$ représente un atome d'hydrogène, un reste aliphatique éventuellement substitué, un reste aryle éventuellement substitué, le groupe cyano, un groupe amino éventuellement substitué ou un groupe de formule générale (2d):

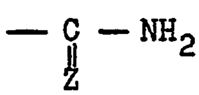 (2d)

dans laquelle:
Z représente un atome d'oxygène, un atome de soufre ou le groupe imido NH, ou bien
$R^4$ et $R^5$ forment avec l'atome d'azote le reste d'un noyau hétérocyclique saturé, pentagonal à octagonal, contenant un groupe alkylène de 4 à 7 atomes de carbone ou deux ou trois groupes alkylènes ayant 1 à 5 atomes de carbone ou bien un ou deux autres hétéro-groupes;
B représente un reste de formule générale (2e), (2f) ou (2g):

$-O-R^6$ , $-S-R^6$ , 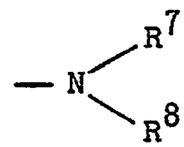

(2e) (2f) (2g)

dans lesquelles:
$R^6$ représente un atome d'hydrogène ou un groupe alkyle ayant 1 à 4 atomes de carbone, qui peut être substitué, ou un reste aryle éventuellement substitué,
$R^7$ représente un atome d'hydrogène, un reste aliphatique éventuellement substitué ou un reste cycloaliphatique éventuellement substitué, et
$R^8$ représente un atome d'hydrogène, un reste aliphatique éventuellement substitué, un reste aryle éventuellement substitué, le groupe cyano, un groupe répondant à la formule générale (2d) citée et définie ci-dessus, le groupe amino, un groupe amino (monosubstitué ou disubstitué par un groupe alkyle ayant 1 à 4 atomes de carbone et/ou par un groupe aryle éventuellement substitué) ou un groupe de formule générale (2h):

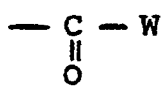 (2h)

dans laquelle W représente un groupe alkyle ayant 1 à 4 atomes de carbone, qui peut être substitué, ou un groupe alcoxy ayant 1 à 4 atomes de carbone, qui peut être substitué, ou un reste aryle, qui peut être substitué, ou bien
$R^7$ et $R^8$ forment avec l'atome d'azote le reste d'un noyau hétérocyclique saturé, pentagonal à octagonal, contenant un groupe alkylène ayant 4 à 7 atomes de carbone ou deux ou trois groupes alkylènes ayant 1 à 5 atomes de carbone ou un ou deux autres hétéro-groupes;
M représente un atome d'hydrogène ou un métal alcalin ou l'équivalent d'un métal alcalino-terreux;
m représente le nombre 1 ou 2;
n représente le nombre 0 ou 1;
p représente le nombre 0, 1 ou 2;
Y représente un groupe thiosulfato-2 éthyle, un groupe phosphato-2 éthyle, le groupe chloro-2 éthyle, le groupe vinyle ou un groupe sulfato-2 éthyle;
le groupe $-SO_2-Y$, qui se trouve une ou deux fois dans le composé de formule (1) est fixé sur le reste A ou D ou sur les deux, en des positions quelconques.

2. Composé selon la revendication 1, dans lequel B représente un reste répondant aux formules (2e), (2f) ou (2g):

$-O-R^6$ , $-S-R^6$ , 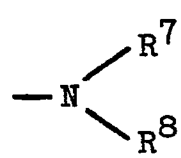

(2e) (2f) (2g)

dans lesquelles:
$R^6$ représente un atome d'hydrogène ou un groupe alkyle ayant 1 à 4 atomes de carbone, qui peut être substitué par un ou deux substituants choisis parmi des groupes alcoxy ayant 1 à 4 atomes de carbone, sulfo, carboxy, hydroxyle, sulfato, phosphato, phényle, naphtyle, phényle (substitué par un ou deux substituants choisis parmi des groupes alkyle ayant 1 à 4 atomes de carbone, alcoxy ayant 1 à 4 atomes de carbone hydroxyle, nitro, carboxy, sulfo et chloro) et naphtyle (substitué par un, deux ou trois groupes sulfo),
ou bien $R_6$ représente un reste phényle ou un reste naphtyle, ou bien un reste phényle (substitué par un

ou deux substituants choisis parmi alkyle ayant 1 à 4 atomes de carbone, hydroxyle, nitro, carboxy, sulfo et chloro) ou un reste naphtyle (substitué par un, deux ou trois groupes sulfo),

$R^7$ représente un atome d'hydrogène ou un groupe alkyle ayant 1 à 4 atomes de carbone, (qui peut être substitué par un ou deux substituants choisis parmi alcoxy ayant 1 à 4 atomes de carbone, sulfo, carboxy, hydroxy, sulfato, phosphato, phényle, naphtyle, phényle (substitué par un ou deux substituants choisis parmi alkyle ayant 1 à 4 atomes de carbone, hydroxy, nitro, carboxy, sulfo et chloro) et un reste naphtyle (substitué par un, deux ou trois groupes sulfo),

ou bien $R^7$ représente un reste alcényle ayant 2 à 4 atomes de carbone, ou un reste cycloalkyle pentagonal à octagonal (qui peut être substitué par un à trois groupes méthyles), et

$R^8$ représente un atome d'hydrogène ou un groupe alkyle ayant 1 à 4 atomes de carbone, qui peut être substitué par un ou deux substituants choisis parmi alcoxy ayant 1 à 4 atomes de carbone, sulfo, carboxy, hydroxy, sulfato, phosphato, phényle, naphtyle, phényle (substitué par un ou deux substituants choisis parmi alkyle ayant 1 à 4 atomes de carbone, alcoxy ayant 1 à 4 atomes de carbone, hydroxy, nitro, carboxy, sulfo et chloro) et naphtyle (substitué par un, deux ou trois groupes sulfo),

ou bien $R^8$ représente un groupe alcényle ayant 2 à 4 atomes de carbone, ou un reste phényle ou naphtyle, ou un reste phényle (substitué par un ou deux substituants choisis parmi alkyle ayant 1 à 4 atomes de carbone, alcoxy ayant 1 à 4 atomes de carbone, hydroxy, nitro, carboxy, sulfo et chloro), ou un reste naphtyle (substitué par un, deux ou trois groupes sulfo),

ou bien $R^8$ représente le groupe cyani ou un groupe de formule générale (2d):

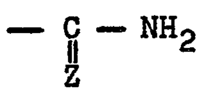

(2d)

dans laquelle Z représente un atome d'oxygène, un atome de soufre ou le groupe imido,

ou $R^8$ représente le groupe amino ou un groupe amino qui est monosubstitué ou disubstitué par un groupe alkyle ayant 1 à 4 atomes de carbone et/ou phényle ou naphtyle ou par un groupe phényle (substitué par un ou deux substituants choisis parmi alkyle ayant 1 à 4 atomes de carbone, alcoxy ayant 1 à 4 atomes de carbone, hydroxy, nitro, carboxy, sulfo et chloro) ou par un groupe naphtyle (substitué par un, deux ou trois groupes sulfo),

ou bien $R^8$ représente un groupe de formule générale (2h):

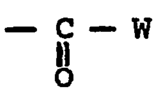

(2h)

dans laquelle W représente un groupe alkyle ayant 1 à 4 atomes de carbone (pouvant être substitué par un ou deux substituants choisis parmi alcoxy ayant 1 à 4 atomes de carbone, sulfo, carboxy, hydroxy, sulfato, phosphato, phényle, naphtyle, phényle (lui-même substitué par un ou deux substituants choisis parmi alkyle ayant 1 à 4 atomes de carbone, alcoxy ayant 1 à 4 atomes de carbone, hydroxy, nitro, carboxy, sulfo et chloro) et par un groupe naphtyle (pouvant lui-même être substitué par un, deux ou trois groupes sulfo)), ou un groupe alcoxy ayant 1 à 4 atomes de carbone, qui peut être substitué par un groupe hydroxy ou par un groupe alcoxy ayant 1 à 4 atomes de carbone ou par un groupe alcoxyalcoxy ayant chacun 1 à 4 atomes de carbone dans les restes alkyles; ou bien

$R^7$ et $R^8$ forment, avec l'atome d'azote, le reste d'un hétérocycle saturé, pentagonal à octagonal, contenant un groupe alkylène ayant 4 à 7 atomes de carbone ou deux ou trois groupes alkylènes ayant 1 à 5 atomes de carbone et un ou deux hétéro-groupes choisis parmi un atome d'azote, d'oxygène et de soufre).

3. Composé selon la revendication 1, répondant à la formule générale (1d):

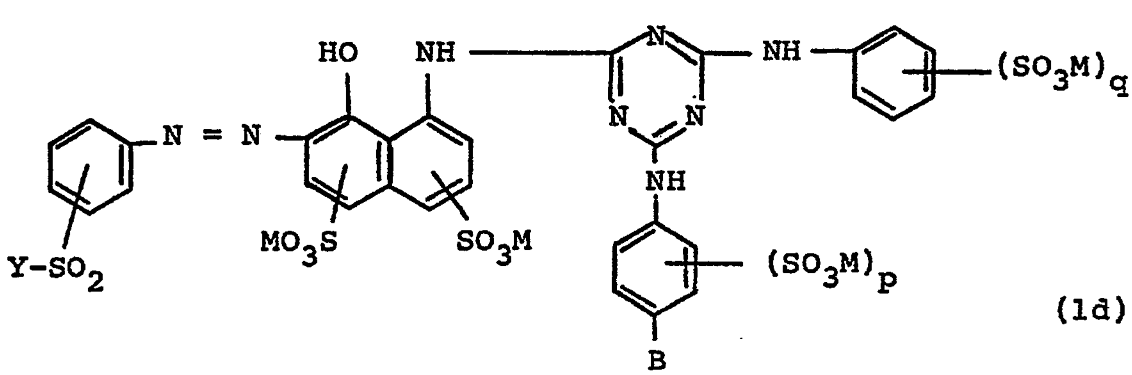

(1d)

dans laquelle M, Y et p ont les sens indiqués à la revendication 1, B est un reste répondant aux formules générales (2f) ou (2g), citées et définies à la revendication 1 ou 2, et q représente le nombre un ou deux.

4. Composé selon la revendication 1, répondant à la formule générale (1g):

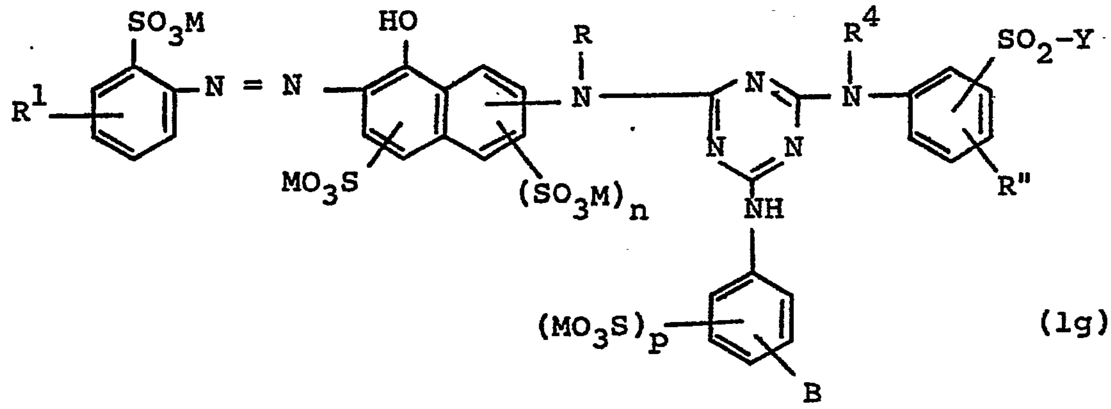

(1g)

dans laquelle B, M, $R^1$, R, $R^4$, Y, p et n ont les sens indiqués à la revendication 1, et R″ représente un atome d'hydrogène, un groupe alkyle ayant 1 à 4 atomes de carbone, un groupe alcoxy ayant 1 à 4 atomes de carbone, un groupe sulfo, un groupe carboxy, un reste aryle pouvant être substitué, un groupe hydroxyle, un groupe nitro ou un atome d'halogène.

5. Composé selon la revendication 1, répondant à la formule générale (1h):

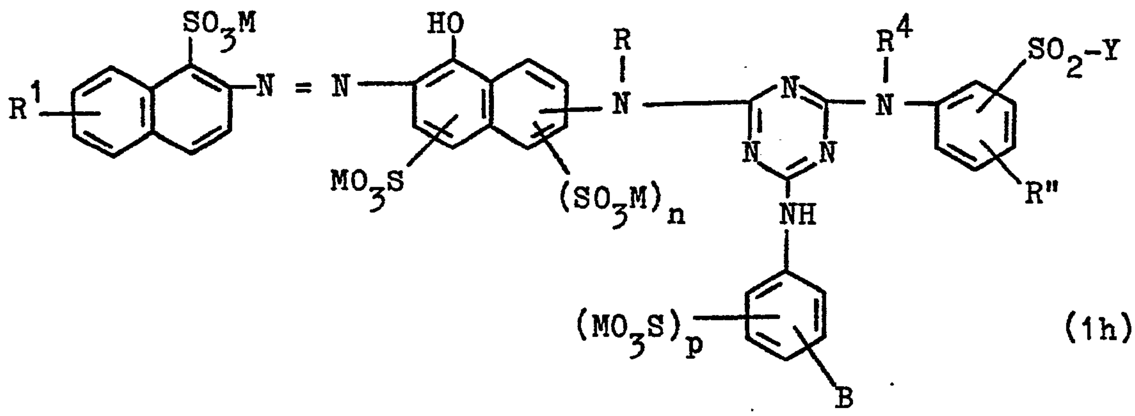

(1h)

dans laquelle B, M, $R^1$, R, $R^4$, Y, p et n ont les sens indiqués à la revendication 1, et R″ représente un atome d'hydrogène, un groupe alkyle ayant 1 à 4 atomes de carbone, un groupe alcoxy ayant 1 à 4 atomes de carbone, un groupe sulfo, un groupe carboxy, un reste aryle pouvant être substitué, un groupe hydroxy, un groupe nitro ou un atome d'halogène.

6. Composé répondant à la formule générale (1A):

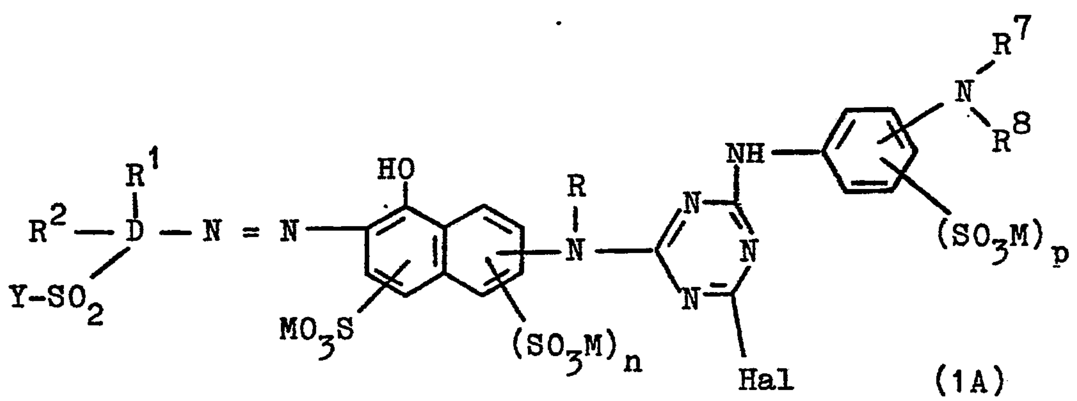

(1A)

dans laquelle D, M, $R^1$, $R^2$, R, Y, n, p, $R^7$ et $R^8$ ont le sens indiqué à la revendication 1 ou 2, et Hal représente un atome de chlore ou de fluor.

7. Composé selon la revendication 6, caractérisé en ce que Hal est un atome de chlore.

8. Procédé pour préparer un composé de formule générale (1), cité et défini à la revendication 1, procédé caractérisé en ce qu'on fait réagir un composé azoïque, de formule générale (3):

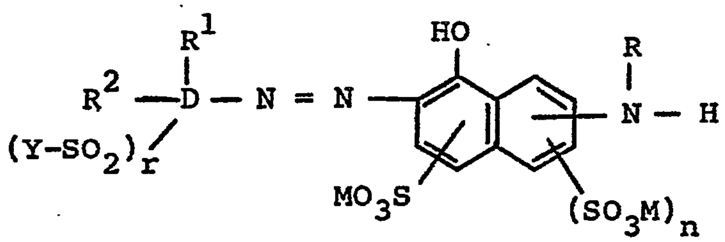

(3),

une amine aromatique de formule générale (4) et un composé de formule générale (5):

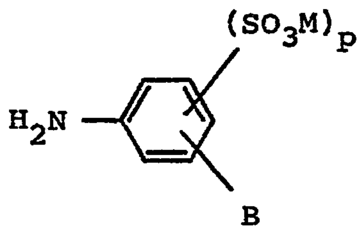

$$H-A-(SO_2-Y)_s$$

(4) (5)

(formules dans lesquelles D, M, $R^1$, $R^2$, R, n, p, A, B et Y ont les sens indiqués à la revendication 1 et r et s représentent chaque fois un nombre nul ou valant 1 ou 2) avec la 2,4,6-trichlorotriazine symétrique ou avec la 2,4,6-trifluorotriazine symétrique, dans un ordre quelconque ou, éventuellement, en même temps, en choisissant les composés de départ de formules générales (3) et (5) de manière que la somme (r + s) vale n, ou bien

on copule un acide triazinylamino-naphtol-sulfonique de formule générale (8):

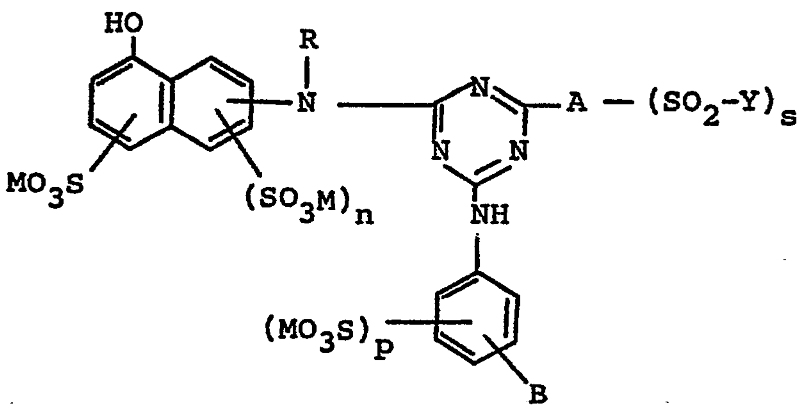

(8)

(dans laquelle A, B, R, M, Y, n, p et s ont les sens précités) avec le composé de diazonium dérivant d'une amine aromatique de formule générale (9):

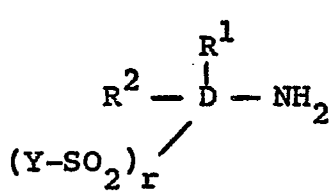

(9)

(dans laquelle D, $R^1$, $R^2$, Y et r ont les sens précités), en choisissant les composés de départ de manière que la somme (r + s) corresponde à la valeur de m.

9. Procédé pour préparer un composé de formule générale (1A), fixé et défini à la revendication 6, procédé caractérisé en ce qu'on copule un acide monohalogénotriazinylamino-naphtol-sulfonique de formule générale (11A):

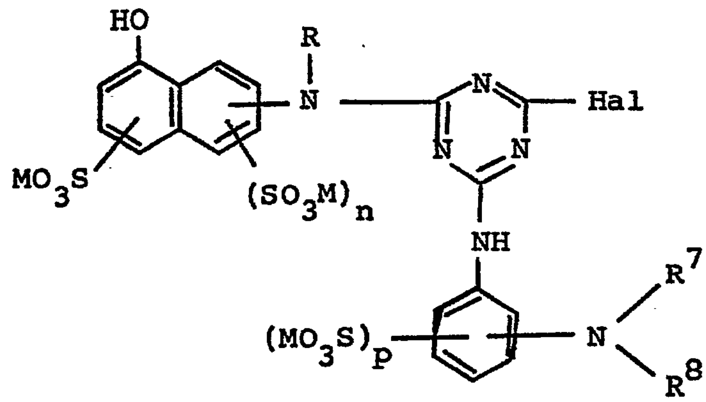

(11A)

(dans laquelle Hal, M, R, p, n, $R^7$ et $R^8$ ont les sens indiqués à la revendication 6) avec le composé de diazonium dérivant d'une amine aromatique de formule générale (9A):

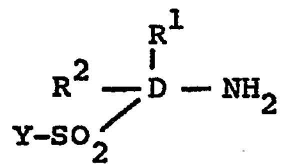

(9A)

(dans laquelle D, $R^1$, $R^2$ et Y ont les sens indiqués à la revendication 6) ou bien en ce qu'on fait réagir un composé azoïque de type acide dihalogénotriazinylamino-naphtolsulfonique de formule générale (13A):

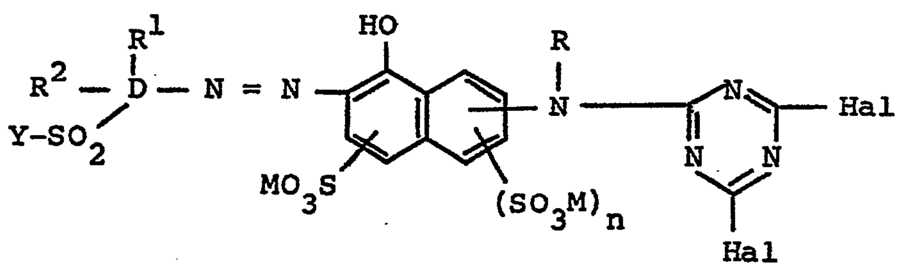

(13A)

(dans laquelle D, M, $R^1$, $R^2$, R, Y, n et Hal ont les sens indiqués à la revendication 6) avec un composé aromatique de formule générale (4A):

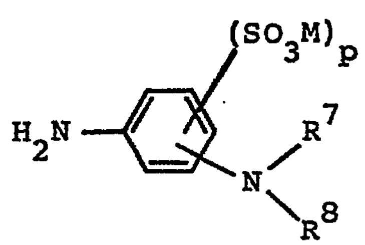

(4A)

dans laquelle M, p, $R^7$ et $R^8$ ont les sens indiqués à la revendication 6.

10. Procédé pour préparer un composé azoïque de formule générale (1) ou (1A), dans lesquelles Y représente le groupe sulfato-2 éthyle, procédé caractérisé en ce qu'on estérifie, à l'aide d'un agent d'estérification, un composé azoïque répondant à la formule générale (1) ou (1A), dans lesquelles cependant l'un des deux restes Y, ou les deux restes Y, représentent un groupe hydroxy-2 éthyle.

11. Procédé pour préparer les composés azoïques de formule générale (1), dans laquelle Y représente le groupe thiosulfato-2 éthyle, procédé caractérisé en ce qu'on fait réagir un composé azoïque, répondant à la formule générale (1) dans laquelle un ou deux groupes de formule $-SO_2-Y$ représente(nt) chacun un groupe sulfato-2 éthylsulfonyle, en milieu aqueux alcalin tout d'abord pour obtenir un composé vinylsulfonylique et l'on fait ensuite réagir celui-ci, à un pH compris entre 3 et 7, avec un thiosulfate alcalin.

12. Utilisation d'un composé azoïque répondant à la formule générale (1), citée et définie à la revendication 1, à titre de colorants.

13. Utilisation d'un composé azoïque répondant à la formule générale (1A), citée et définie à la revendication 6, à titre de colorants.

14. Utilisation selon la revendication 12 ou 13 pour teindre des matières contenant des groupes hydroxyles et/ou carboxamides, en particulier des matières fibreuses.

15. Procédé pour teindre (ce qui comprend l'impression) de la matière contenant des groupes hydroxyles et/ou carboxamides, en particulier de la matière fibreuse, dans lequel on applique un colorant sur la matière ou bien on introduit un colorant dans la matière et on l'y fixe par la chaleur et/ou à l'aide d'un agent de fixation des acides, procédé caractérisé en ce qu'on utilise comme colorant un composé répondant à la formule générale (1) ou (1A), fixée et définie à la revendication 1 ou à la revendication 6.